# EUROPÄISCHE PATENTSCHRIFT

(11) **EP 3 475 129 B1**
(45) Veröffentlichungstag und Bekanntmachung des Hinweises auf die Patenterteilung: **27.05.2020**
(21) Anmeldenummer: 16731932.6
(22) Anmeldetag: 24.06.2016
(51) Int. Cl.: B60S 3/00

(54) **TROCKNUNGSVORRICHTUNG FÜR KRAFTFAHRZEUGE UND FAHRZEUGWASCHANLAGE MIT EINER TROCKNUNGSVORRICHTUNG**
DRYING APPARATUS FOR MOTOR VEHICLES, AND VEHICLE WASHING INSTALLATION HAVING A DRYING APPARATUS
DISPOSITIF DE SÉCHAGE POUR VÉHICULES À MOTEUR ET INSTALLATION DE LAVAGE DES VÉHICULES POURVUE D'UN DISPOSITIF DE SÉCHAGE

(43) Veröffentlichungstag der Anmeldung: 01.05.2019
(73) Patentinhaber: Alfred Kärcher SE & Co. KG, 71364 Winnenden (DE)
(72) Erfinder: SEIBOLD, Andreas, 71394 Kernen (DE); BENSING, Felix, 70437 Stuttgart (DE); GELTZ, Tobias, 73230 Kirchheim unter Teck (DE); HABERL, Bernd, 71554 Weissach im Tal (DE); ULRICHSKÖTTER, Heinz-Peter, 73630 Remshalden (DE)
(74) Vertreter: Hoeger, Stellrecht & Partner Patentanwälte mbB
(86) Internationale Anmeldenummer: PCT/EP2016/064766
(87) Internationale Veröffentlichungsnummer: WO 2017/220171

(56) Entgegenhaltungen:
- GB-A- 2 243 129
- JP-A- 2010 100 188
- US-A- 4 991 316

## Beschreibung

Die vorliegende Erfindung betrifft eine Trocknungsvorrichtung für Kraftfahrzeuge zur Verwendung in einer Fahrzeugwaschanlage, welche Trocknungsvorrichtung in einer Behandlungsrichtung relativ zur Oberfläche eines zu trocknenden Kraftfahrzeuges bewegbar ist, wobei die Trocknungsvorrichtung eine Mehrzahl von mit Trocknungsluft beaufschlagbaren Düsen und eine Düsentrageinrichtung für die Düsen sowie eine die Düsentrageinrichtung haltende Halteeinrichtung umfasst.

Außerdem betrifft die vorliegende Erfindung eine Fahrzeugwaschanlage mit mindestens einer derartigen Trocknungsvorrichtung. Bei der Fahrzeugwaschanlage kann es sich um eine Portalwaschanlage handeln, bei der ein Wasch- und Trocknungsportal relativ zu einem ortsfesten Kraftfahrzeug verschoben wird. Die Fahrzeugwaschanlage kann alternativ eine Waschstraße sein, in der das Kraftfahrzeug relativ zu der stationär angeordneten Trocknungsvorrichtung bewegt wird. Im Falle einer Portalwaschanlage ist die Behandlungsrichtung der Trocknungsvorrichtung durch die Bewegung des Wasch- und Trocknungsportals relativ zum Kraftfahrzeug gegeben. Bei einer Waschstraße entspricht die Behandlungsrichtung derjenigen Richtung, die der Bewegungsrichtung des Kraftfahrzeuges auf die Trocknungsvorrichtung entgegengesetzt ist.

Ausführungsformen von Trocknungsvorrichtungen für Kraftfahrzeuge sind in der GB 2 243 129 A, in der US 4,991,316 und in der JP 2010-100188 A beschrieben. Die GB 2 243 129 A offenbart den Oberbegriff des unabhängigen Anspruchs 1.

Aufgabe der vorliegenden Erfindung ist es, eine Trocknungsvorrichtung der eingangs genannten Art und eine Fahrzeugwaschanlage bereitzustellen, bei der ein besseres Trocknungsergebnis für das Kraftfahrzeug erzielbar ist.

Diese Aufgabe wird bei einer gattungsgemäßen Trocknungsvorrichtung erfindungsgemäß dadurch gelöst, dass die Düsentrageinrichtung quer zur Behandlungsrichtung nebeneinander angeordnet mindestens zwei Düsentragteile aufweist und an jedem Düsentragteil mindestens eine Düse direkt oder indirekt gehalten ist und dass die Trocknungsvorrichtung eine Verstelleinrichtung umfasst zum Bewegen der mindestens zwei Düsentragteile an der Halteeinrichtung und Überführen der Düsentragteile relativ zueinander zwischen mindestens zwei Relativstellungen, in denen die Düsentragteile mit unterschiedlichen Winkeln zueinander ausgerichtet sind, wobei die zwei oder mehr Relativstellungen mindestens eine Winkelstellung umfassen, in der aus den Düsen austretende Luftströme in der Behandlungsrichtung führend einen Scheitelbereich aufweisen oder bilden.

Bei der erfindungsgemäßen Trocknungsvorrichtung ist vorgesehen, dass die mindestens zwei Düsentragteile, an denen jeweils mindestens eine Düse gehalten ist, mittels der Verstelleinrichtung bewegbar sind. Beispielsweise können die Düsentragteile relativ zur Halteeinrichtung verschwenkt und/oder verschoben werden. Dies erlaubt es, die Düsentragteile unter unterschiedlichen Winkeln zueinander auszurichten. Zwei oder mehr Relativstellungen sind möglich, wobei insbesondere die Möglichkeit gegeben ist, dass die Düsentragteile eine Winkelstellung einnehmen. In der Winkelstellung umfassen oder bilden die aus den Düsen austretenden Luftströme in der Behandlungsrichtung führend mindestens einen Scheitelbereich. Durch den mindestens einen Scheitelbereich wird Flüssigkeit auf der Fahrzeugoberfläche beim Trocknen seitwärts nach außen weggeblasen. Es zeigt sich in der Praxis, dass das Trocknungsergebnis dadurch verbessert werden kann. Insbesondere lässt sich ein Spritzen von Flüssigkeitstropfen aus Spalten der Fahrzeugoberfläche, wie es bei herkömmlichen Trocknungsvorrichtungen auftreten kann, weitgehend vermeiden. Am Scheitelbereich wird durch die Luftströme der Düsen beispielsweise eine Keilform oder eine in der Behandlungsrichtung konvexe Form der Luftströme erzielt. Dies ist beispielsweise dadurch möglich, dass die zwei oder mehr Düsentragteile relativ zueinander in der Winkelstellung so ausgerichtet sind, dass die Düsentrageinrichtung eine Keilform oder konvexe Form aufweist. Es kann bei einer Mehrzahl von Düsentragteilen jedoch auch vorgesehen sein, dass eine Mehrzahl von Scheitelbereichen in deren Winkelstellungen vorhanden ist, beispielsweise sind die mehreren Düsentragteile zick-zack-förmig zueinander ausgerichtet.

Bei der Trocknungsvorrichtung besteht ferner die Möglichkeit, dass die Düsentragteile zueinander mindestens eine weitere Relativstellung einnehmen. Dies erlaubt es beispielsweise, die Winkelstellung abhängig von der Oberfläche des Fahrzeuges so zu variieren, dass ein optimales Trocknungsergebnis erzielt wird. Beispielsweise wird die Winkelstellung abhängig von der zuvor erfassten Kontur des Fahrzeuges gewählt. Ferner ist vorteilhafterweise die Möglichkeit gegeben, dass die Düsentragteile zueinander in eine Geradstellung überführt werden, in der sie quer oder schief zur Behandlungsrichtung miteinander fluchten. Dies erlaubt es zum Beispiel, die Trocknungsvorrichtung außer Betrieb platzsparend zu verstauen.

Bei der erfindungsgemäßen Trocknungsvorrichtung besteht somit insbesondere die Möglichkeit, die Form der auf das Fahrzeug auftreffenden Front der Trocknungsluft zu verändern. Dabei ist mindestens ein Scheitelbereich vorgesehen in der Winkelstellung der Düsentragteile, wodurch die Flüssigkeit auf der Kraftfahrzeugoberfläche nach außen weggetrieben und ein gutes Trocknungsergebnis erzielt werden kann.

Die Trocknungsvorrichtung ist bei einer vorteilhaften Ausführungsform eine Dachtrocknungsvorrichtung. Hierunter wird eine Trocknungsvorrichtung verstanden, mit der an einer Oberseite des Kraftfahrzeuges angeordnete Flächen getrocknet werden können, insbesondere dessen Dach, jedoch ist es selbstverständlich auch möglich, die Motorhaube, die Frontscheibe, die Heckscheibe und eine Heckklappe oder einen Kofferraumdeckel zu trocknen. Ist die Trocknungsvorrichtung, wie nachfolgend erläutert, kippbar, kann sie auch zum Trocknen der Front oder des Hecks des Kraftfahrzeuges eingesetzt werden.

Günstig ist es, wenn die zwei oder mehr Relativstellungen eine Geradstellung der Düsentragteile umfassen, in welcher diese miteinander fluchten und die Düsentrageinrichtung geradlinig oder im Wesentlichen geradlinig ausgestaltet ist. Der Winkel zwischen den Düsentragteilen kann dementsprechend 180° oder im Wesentlichen 180° betragen. In der Geradstellung können die Düsentragteile beispielsweise quer zur Behandlungsrichtung (Querrichtung) miteinander fluchten. Denkbar ist auch, dass die Düsentragteile schräg zur Behandlungsrichtung und schräg zur Querrichtung miteinander fluchten, wenn sie die Geradstellung einnehmen. Dadurch kann die Düsentrageinrichtung eine Ausrichtung diagonal über das Fahrzeug einnehmen, und Flüssigkeit kann schräg über das Fahrzeug von einer Seite zur anderen getrieben werden.

In der Geradstellung der Düsentragteile ist die von den Luftströmen der Düsen gebildete Front an Trocknungsluft beispielsweise eben, ohne dass ein Scheitelbereich gebildet ist. In der Geradstellung der Düsentragteile bei quer zur Behandlungsrichtung ausgerichteten Düsentragteilen kann die Trocknungsvorrichtung, wie bereits erwähnt, platzsparender verstaut werden. Eine um eine Achse quer zur Behandlungsrichtung neigbare Trocknungsvorrichtung kann dadurch auch näher an der Oberfläche des Kraftfahrzeuges vorbeigeschwenkt werden. Dies erweist sich beispielsweise an Übergängen zwischen im Winkel zueinander ausgerichteten Fahrzeugflächen als vorteilhaft, zum Beispiel im Bereich des Übergangs von der Motorhaube zur Frontscheibe.

Von Vorteil ist es, wenn die zwei oder mehr Relativstellungen eine Mehrzahl von Winkelstellungen umfassen, in der die Düsentragteile in unterschiedlichen Winkeln zueinander ausgerichtet sind, wobei aus den Düsen austretende Luftströme in der Behandlungsrichtung führend jeweils mindestens einen Scheitelbereich aufweisen oder bilden. Dies erlaubt es, die Trocknungsvorrichtung vielseitiger an die Form des Kraftfahrzeuges anzupassen und ein optimales Trocknungsergebnis zu erzielen. Bei einem Keil bildenden Düsentragteilen unterscheiden sich die Winkelstellungen insbesondere durch einen unterschiedlichen Keilwinkel zwischen den Düsentragteilen.

Als Winkel wird vorliegend der kleinere der zwischen den Düsentragteilen gebildete Winkel angesehen.

Vorzugsweise sind die Düsentragteile mittels der Verstelleinrichtung kontinuierlich oder schrittweise zwischen den zwei oder mehr Relativstellungen überführbar, insbesondere zwischen zwei oder mehr Winkelstellungen. Es kann vorteilhafterweise eine beliebige Anzahl von Winkelstellungen vorgesehen sein, in denen die Düsentragteile in unterschiedlichen Winkeln zueinander ausgerichtet sind. Bei keilförmig angeordneten Düsentragteilen sind dies unterschiedliche Keilwinkel.

Benachbarte Düsentragteile können an einem Gelenk schwenkbar und/oder verschiebbar miteinander verbunden sein. Vorzugsweise ist das Gelenk an einer dem jeweils benachbarten Düsentragteil zugewandten Endseite eines Düsentragteils angeordnet.

Von Vorteil ist es, wenn die Behandlungsrichtung umkehrbar ist, insbesondere bei Einsatz der Trocknungsvorrichtung in einer Portalwaschanlage. Dabei ist es günstig, wenn die Düsentragteile mittels der Verstelleinrichtung relativ zueinander zwischen mindestens zwei Relativstellungen überführbar sind, in der die Düsentragteile mit unterschiedlichen Winkeln zueinander ausgerichtet sind, wobei mindestens eine Winkelstellung vorgesehen ist, in der aus den Düsen austretende Luftströme in der umgekehrten Behandlungsrichtung führend einen Scheitelbereich aufweisen oder bilden. Dies gibt die Möglichkeit, bei einer Umkehr der Behandlungsrichtung die Düsentragteile relativ zur Halteeinrichtung auch in die Gegenrichtung zu verschwenken und/oder zu verschieben, damit auch bei Bewegung des Portals in umgekehrter Behandlungsrichtung eine Winkelstellung erzielbar ist, in der die Luftströme mindestens einen Scheitelbereich aufweisen oder bilden. Die Trocknungsvorrichtung weist dadurch eine hohe Vielseitigkeit auf.

Von Vorteil ist es, wenn die Trocknungsvorrichtung eine Detektionseinrichtung zum Erfassen der Kontur des Kraftfahrzeuges umfasst und eine mit der Detektionseinrichtung und mit der Verstelleinrichtung gekoppelte Steuereinrichtung, wobei die Düsentragteile abhängig von der erfassten Kontur die mindestens eine Winkelstellung einnehmen. Der Betrieb der Trocknungsvorrichtung kann dadurch im Hinblick auf ein optimales Trocknungsergebnis angepasst werden. Die Kontur des Fahrzeuges kann vor oder während des Trocknungsvorganges erfasst werden. Beispielsweise wird die Kontur bereits vor oder während eines Waschganges erfasst. Abhängig von der Kontur kann die Steuereinrichtung die Verstelleinrichtung derart ansteuern, dass die Düsentragteile eine derartige Winkelstellung einnehmen, dass die Front der Luftströme optimal an die zu trocknende Oberfläche angepasst ist. Denkbar ist auch, dass die Düsentragteile in die bereits erwähnte Geradstellung überführt werden. Dies ist zum Beispiel zum Trocknen einer Fahrzeugfront oder eines Hecks des Fahrzeugs vorteilhaft.

Günstig ist es, wenn die Düsentragteile an einem Übergangsbereich, an dem Oberflächen des Kraftfahrzeuges im Winkel aufeinanderstoßen, die Geradstellung zueinander einnehmen oder eine Winkelstellung einnehmen, in der sie in einem größeren Winkel zueinander ausgerichtet sind als im Abstand zum Übergangsbereich. Darauf wurde bereits eingegangen. Stoßen Oberflächen des Kraftfahrzeuges in einem (von 180° unterschiedlichen) Winkel aufeinander, werden die Düsentragteile in die Geradstellung oder eine derartige Winkelstellung überführt, dass die Trocknungsvorrichtung besser näher am Fahrzeug vorbeigeführt werden kann. Im Abstand zum Übergangsbereich kann der Winkel zwischen den Düsentragteilen verkleinert werden beispielsweise durch eine stärker ausgeprägte Keilform, wodurch Flüssigkeit verbessert nach außen weggetrieben werden kann.

Die Trocknungsvorrichtung kann, insbesondere bei nur zwei Düsentragteilen, in der mindestens einen Winkelstellung der Düsentragteile eine in der Behandlungsrichtung keilförmige Gestalt aufweisen. Auch die auf das Fahrzeug treffende Front der Luftströme kann keilförmig gebildet sein mit dem mindestens einen Scheitelbereich.

Bei einer andersartigen Ausführungsform kann vorgesehen sein, dass die Düsentrageinrichtung mehr als zwei Düsentragteile umfasst, die in der mindestens einen Winkelstellung derart zueinander ausgerichtet sind, dass die Düsentrageinrichtung eine in der Behandlungsrichtung konvexe oder trapezförmige Gestalt aufweist. Beispielsweise sind die Düsentragteile in der mindestens einen Winkelstellung bogenförmig angeordnet, und die Düsentrageinrichtung weist eine konvexe Gestalt auf. Auch die Front der Luftströme kann eine konvexe Gestalt mit dem mindestens einen Scheitelbereich aufweisen. Eine Trapezform der Düsentrageinrichtung wird zum Beispiel erzielt, indem zwei oder mehr Düsentragteile schief zur Behandlungsrichtung ausgerichtet und aufeinander zu geneigt sind und mindestens ein Düsentragteil zwischen diesen quer zu Behandlungsrichtung ausgerichtet ist. Die Front der Luftströme kann ebenfalls trapezförmig mit mindestens einem Scheitelbereich sein.

Bei einer andersartigen Ausführungsform kann vorgesehen sein, dass die Düsentrageinrichtung mehr als zwei Düsentragteile umfasst, die in der mindestens einen Winkelstellung eine Zick-Zack-Anordnung zueinander einnehmen. Dies gibt, wie bereits erwähnt, die Möglichkeit, eine Mehrzahl von Scheitelbereichen der Luftströme in der Behandlungsrichtung zu bilden. Auch die Front der Luftströme kann zick-zack-förmig gebildet sein.

Die Verstelleinrichtung kann auf vielfältige Weise ausgestaltet sein. Zumindest eine der folgenden Ausgestaltungen ist zum Beispiel denkbar: mechanisch, elektrisch, pneumatisch und/oder hydraulisch.

Bei einer vorteilhaften Umsetzung der Trocknungsvorrichtung umfasst die Verstelleinrichtung mindestens ein vorzugsweise pneumatisches Kolben-Zylinder-Aggregat, das an der Halteeinrichtung und direkt oder indirekt an mindestens einem Düsentragteil angreift. Das Kolben-Zylinder-Aggregat bildet ein Stellorgan der Verstelleinrichtung, bei dessen Längenänderung das Düsentragteil relativ zur Halteeinrichtung verschwenkt und/oder verschoben werden kann.

Als günstig erweist es sich, wenn die Düsentragteile an der Halteeinrichtung über die Verstelleinrichtung schwenkbar und/oder verschieblich ausgestaltet sind, wobei korrespondierende Lagerelemente der Düsentragteile und der Halteeinrichtung zusammenwirken. Die Lagerelemente sind beispielsweise quer zur Behandlungsrichtung außenseitig oder endseitig an den Düsentragteilen und an der Halteeinrichtung angeordnet.

Es kann vorgesehen sein, dass zusammenwirkende Lagerelemente eines jeweiligen Düsentragteils und der Halteeinrichtung ein Schwenklager bilden.

Als günstig erweist es sich, wenn ein jeweiliges von den zusammenwirkenden Lagerelementen gebildetes Schwenklager beim Überführen der Düsentragteile in die mindestens eine Winkelstellung positionsveränderlich ist zum Verschieben der Düsentragteile relativ zueinander. Zusätzlich zur Schwenkbewegung kann dadurch eine Verschiebebewegung erzielt werden. Dies ist von Vorteil, weil mit zunehmender Verschwenkung der Düsentragteile zur Halteeinrichtung (verbunden mit einem kleiner werdenden Winkel zwischen den Düsentragteilen) ein Abstand zwischen den Düsentragteilen am Scheitelbereich größer werden kann. Durch die Möglichkeit, die Düsentragteile relativ zueinander durch Bewegung der Schwenklager zu verschieben, kann eine Abstandsvergrößerung am Scheitelbereich vermieden werden. Idealerweise nehmen die Düsentragteile zueinander unabhängig vom Schwenkwinkel relativ zur Halteeinrichtung am Scheitelbereich einen konstanten Abstand ein.

Die zusammenwirkenden Lagerelemente umfassen vorzugsweise einen Lagerzapfen und eine Führung für diesen, wobei der Lagerzapfen beim Verschwenken der Düsentragteile relativ zur Halteeinrichtung in der Führung verschoben wird. Die Führung ist zum Beispiel ein quer zur Behandlungsrichtung ausgerichtetes Langloch, in dem der Lagerzapfen verschoben werden kann.

Es kann vorgesehen sein, dass der Lagerzapfen am Düsentragteil angeordnet ist und die Führung an der Halteeinrichtung, dies kann jedoch auch umgekehrt sein.

Von Vorteil ist es, wenn eine jeweilige Zwangsführung vorgesehen ist, die die Bewegung des Düsentragteils führt, wenn das Düsentragteil relativ zur Halteeinrichtung verschwenkt und verschoben wird. Dadurch kann eine definierte Schwenk-Verschiebe-Bewegung der Düsentragteile relativ zur Halteeinrichtung erzielt werden.

Die jeweilige Zwangsführung umfasst vorzugsweise eine Führungskulisse und ein in diese eingreifendes Führungselement.

Die Führungskulisse ist beispielsweise an der Halteeinrichtung angeordnet und das Führungselement am Düsentragteil, dies kann jedoch auch umgekehrt sein.

Als günstig erweist es sich, wenn die Führungskulisse im Wesentlichen W- oder V-förmig ausgestaltet ist. Beispielsweise weist die Führungskulisse gebogene Abschnitte auf, gewissermaßen die "Seiten" des W oder des V. Dies erlaubt zum Beispiel eine Führung des Führungselementes für den Fall, dass die Düsentragteile in Richtung der Behandlungsrichtung verschwenkbar sind sowie, wie bereits erwähnt, auch in der Richtung der umgekehrten Behandlungsrichtung. Bei beiden Schwenkbewegungen können die Düsentragteile zwangsgeführt werden. Mittig ist an der Führungskulisse, gewissermaßen in der "Mitte" des W oder V, vorzugsweise ein Knick oder eine Aussparung vorhanden, an dem bzw. in die das Führungselement quasi rastend eingreifend kann. Dies ist zum Beispiel dann der Fall, wenn die Düsentragteile, die vorstehend erläutert sind, Geradstellung einnehmen, welche dadurch besonders gut definiert ist.

Eine andersartige vorteilhafte Ausführungsform sieht vor, dass die jeweilige Zwangsführung ein Gelenkglied umfasst, das an der Halteeinrichtung und am Düsentragteil angelenkt ist. Das Gelenkglied schränkt die Möglichkeit des Düsentragteils ein, sich relativ zur Halteeinrichtung zu bewegen. Dadurch kann im Ergebnis die kombinierte Schwenk- und Verschiebebewegung sichergestellt werden.

Als günstig erweist es sich, wenn ein Stellorgan der Verstelleinrichtung, insbesondere ein Kolben-Zylinder-Aggregat, am Gelenkglied und an der Halteeinrichtung angreift. Am Gelenkglied ist das Stellorgan vorzugweise in einer einer Mehrzahl von unterschiedlichen vordefinierten Positionen festlegbar. Je nachdem, an welcher Position das Stellorgan am Gelenkglied angreift, lässt sich dadurch beispielsweise der Bewegungsumfang des Düsentragteils relativ zur Halteeinrichtung vorgeben.

Von Vorteil ist es, wenn die Trocknungsvorrichtung eine Kopplungseinrichtung umfasst, zum Koppeln der Düsentragteile miteinander, wobei eine Bewegung eines Düsentragteils relativ zur Halteeinrichtung an das andere Düsentragteil übertragbar und dieses ebenfalls relativ zur Halteeinrichtung bewegbar ist. Dies gibt zum einen die Möglichkeit einer aufeinander abgestimmten, synchronisierten Bewegung der Düsentragteile relativ zur Halteeinrichtung. Ferner besteht die Möglichkeit, dass mit nur einem Stellorgan der Verstelleinrichtung beide Düsentragteile bewegt werden können.

Es ist daher von Vorteil, wenn die Verstelleinrichtung an nur einem der Düsentragteile angreift, um diese relativ zur Halteeinrichtung zu bewegen.

Eine vorteilhafte Ausführungsform der Trocknungsvorrichtung sieht vor, dass die Kopplungseinrichtung ein die Düsentragteile miteinander verbindendes Gelenk umfasst, über das die Düsentragteile schwenkbar miteinander verbunden sind. Vorzugsweise ist das Gelenk an einer jeweiligen Endseite der Düsentragteile angeordnet, die dem anderen Düsentragteil zugewandt ist. Dies erlaubt es insbesondere auch, den Abstand der Düsentragteile bei der kombinierten Schwenk-Verschiebebewegung konstant zu halten. Dadurch wird sichergestellt, dass der Scheitelbereich auch bei unterschiedlichen Winkelstellungen der Düsentragteile erhalten bleibt.

Derselbe Vorteil lässt sich bei einer andersartigen vorteilhaften Ausführungsform dadurch erzielen, dass die Kopplungseinrichtung an den Düsentragteilen jeweils einen Wälzkörper umfasst, die beim Verschwenken der Düsentragteile in die mindestens einen Winkelstellung aufeinander abwälzen, wobei die Wälzkörper vorzugsweise an jeweiligen einander zugewandten Endseiten der Düsentragteile angeordnet sind.

Vorliegend kann der jeweilige Wälzkörper ein Zahnrad oder ein Zahnradsegment sein. Zahnräder oder Zahnradsegmente können miteinander kämmen.

Weiter lässt sich der genannte Vorteil zum Beispiel bei einer bevorzugten Ausführungsform erzielen, bei der die Kopplungseinrichtung ein Gelenkglied umfasst, das an den Düsentragteilen angelenkt ist, vorzugsweise an jeweiligen einander zugewandten Endseiten der Düsentragteile. Das Gelenkglied umfasst zum Beispiel eine Führung, in die an den Düsentragteilen angelenkte Führungselemente eingreifen.

Bei einer andersartigen vorteilhaften Ausführungsform kann vorgesehen sein, dass die Kopplungseinrichtung ein Gelenkglied umfasst, das an den Gelenkgliedern der jeweiligen Zwangsführung angelenkt ist.

Eine vorteilhafte Ausführungsform der Trocknungsvorrichtung sieht vor, dass die Verstelleinrichtung einen jeweiligen Wälzantrieb für die Düsentragteile umfasst mit einer an der Halteeinrichtung verschiebbaren Antriebsbahn und einem auf dieser abwälzenden und am Düsentragteil direkt oder indirekt festgelegten Wälzkörper. Durch Verschieben der Antriebsbahn kann der Wälzkörper und damit das jeweilige Düsentragteil relativ zur Halteeinrichtung verschwenkt werden.

Vorliegend kann der Wälzantrieb ein Zahnstangentrieb sein, wobei die Antriebsbahn eine Zahnstange ist und der Wälzkörper ein mit dieser kämmendes Zahnrad oder Zahnradsegment.

Es kann vorgesehen sein, dass der Wälzkörper drehfest mit einem jeweiligen Gelenkglied der jeweiligen Zwangsführung verbunden ist. Durch Verschieben der Antriebsbahn wird das Gelenkglied der Zwangsführung gedreht, das an der Halteeinrichtung und am jeweiligen Düsentragteil angelenkt ist. Dadurch kann die erwähnte Schwenk- und Verschiebebewegung umgesetzt werden.

Von Vorteil ist es, wenn die Verstelleinrichtung ein gemeinsames Antriebsrad umfasst, mit dem beide den Düsentragteilen zugeordnete Antriebsbahnen antreibbar sind. Getrennte Verstelleinrichtungen für die Düsentragteile können dadurch eingespart werden.

Eine vorteilhafte Ausführungsform der Trocknungsvorrichtung sieht vor, dass die Düsentragteile mit der Halteeinrichtung jeweils über zwei Gelenkglieder unterschiedlicher Länge gelenkig verbunden sind, die im Abstand zueinander an der Halteeinrichtung und an dem jeweiligen Düsentragteil angelenkt sind. Jeden Düsentragteil sind zwei unterschiedlich lange Gelenkglieder zugeordnet. Die jeweiligen Drehpunkte an der Halteeinrichtung und am Düsentragteil sind voneinander beabstandet. Die Halteeinrichtung und ein jeweiliges Düsentragteil sowie die beiden Gelenkglieder bilden ein Viergelenk. Dadurch kann eine Schwenkbewegung des Düsentragteils und zugleich eine Bewegung in Richtung auf das andere Düsentragteil umgesetzt werden.

Eine andersartige vorteilhafte Ausführungsform der Trocknungsvorrichtung sieht vor, dass die Düsentragteile mit der Halteeinrichtung jeweils schwenkbar verbunden sind, wobei für jedes Düsentragteil zwei im Abstand zueinander angeordnete gekrümmte Führungsbahnen und in diese eingreifende Führungselemente vorgesehen sind. Beispielsweise sind die Führungsbahnen an der Halteeinrichtung gebildet, und das Düsentragteil umfasst die Führungselemente, der umgekehrte Fall ist jedoch auch möglich. Auch auf diese Weise lässt sich eine überlagerte Schwenk- und Verschiebebewegung eines Düsentragteils relativ zum anderen Düsentragteil umsetzen.

In der Praxis erweist es sich als vorteilhaft, wenn die Halteeinrichtung einem jeweiligen Düsentragteil zugeordnet ein Halteteil umfasst, an dem das jeweilige Düsentragteil beweglich gelagert ist, sowie einen die Halteteile haltenden Träger.

Die Trocknungsvorrichtung umfasst vorteilhafterweise eine Hubeinrichtung zum Anheben der Halteeinrichtung mit daran gehaltener Düsentrageinrichtung relativ zum Kraftfahrzeug und/oder eine Kippeinrichtung zum Kippen der Halteeinrichtung mit daran gehaltener Düsentrageinrichtung relativ zum Kraftfahrzeug. Es ist insbesondere eine Steuereinrichtung zum Ansteuern der Hubeinrichtung und/oder der Kippeinrichtung vorgesehen. Beispielsweise kann der vorstehend erwähnte Träger der Halteeinrichtung quer zur Behandlungsrichtung ausgerichtet sein und an weiteren Trägern mittels der Hubeinrichtung höhenverstellbar gehalten sein und/oder mittels der Kippeinrichtung um eine Achse quer zur Behandlungsrichtung kippbar gehalten sein.

"Querrichtung" bezieht sich vorliegend auf eine Richtung quer zur Behandlungsrichtung und insbesondere parallel zu einer Aufstellfläche für das Kraftfahrzeug.

Die vorstehend erwähnten Halteteile und/oder die Düsentragteile sind bei einer konstruktiv einfachen Ausführung aus einem Flachmaterial gebildet, das zum Beispiel aus Metall gefertigt ist und zur Versteifung gekantet sein kann.

Die Düsen der Trocknungsvorrichtung können vorteilhafterweise Folgendes sein oder umfassen:
- Flachstrahldüsen, die einen sich fächerförmig verbreiternden Luftstrom im Wesentlichen in einer Ebene bilden; und/oder
- Rundstrahldüsen, die einen zylindrischen, hohlzylindrischen (Luftstrom zum Beispiel entlang eines Zylindermantels), kegelförmigen, kegelstumpfförmigen oder hohlkegelförmigen Luftstrom bilden; und/oder
- Schlitzdüsen, wobei an jedem Düsentragteil genau eine Schlitzdüse vorgesehen sein kann; und/oder
- Düsen, die einen Luftstrom in einer gekrümmten Fläche ausbilden (zum Beispiel in der Behandlungsrichtung konvex oder konkav), welcher sich verbreiternd oder von konstanter Breite sein kann.

An den Düsentragteilen kann jeweils eine Mehrzahl von Düsen gehalten sein. Die Düsen sind vorzugsweise seitlich nebeneinander an dem Düsentragteil angeordnet, insbesondere wenn es sich um Flachstrahldüsen handelt. Die Düsen können äquidistant zueinander positioniert sein.

Bei einer vorteilhaften Ausführungsform der Trocknungsvorrichtung kann vorgesehen sein, dass die Düsen so an den Düsentragteilen angeordnet sind, dass in deren mindestens einer Winkelstellung die Luftströme eine konvexe oder konkave Form in der Behandlungsrichtung ausbilden. Beispielsweise sind Flachstrahldüsen vorgesehen, deren Luftströme nicht koplanar ausgerichtet sind, sondern unter einem Winkel zueinander. In der Behandlungsrichtung lässt sich dadurch eine konvexe oder eine konkave Front der Luftströme erzielen, wobei jeweils mindestens ein Scheitelbereich in der Winkelstellung der Düsentragteile vorhanden ist.

Die Mehrzahl der Düsen an den Düsentragteilen sind insbesondere Flachstrahldüsen und/oder Rundstrahldüsen.

Es kann vorgesehen sein, dass die mehreren Düsen getrennt voneinander am Düsentragteil gehalten sind und von einer Gebläseeinrichtung der Trocknungsvorrichtung über jeweilige Kanäle mit Trocknungsluft beaufschlagbar sind.

Bei einer vorteilhaften Ausführungsform ist vorgesehen, dass an einem jeweiligen Düsentragteil ein Kanal für Trocknungsluft gehalten ist oder dass das jeweilige Düsentragteil einen solchen Kanal umfasst oder durch einen Kanal gebildet ist, der austrittsseitig die Mehrzahl von Düsen aufweist und der eintrittsseitig von einer Gebläseeinrichtung mit Trocknungsluft beaufschlagbar ist. Gesonderte Kanäle für jede Düse können dadurch eingespart werden. Der Kanal mit den daran angeordneten Düsen kann ein Düsentragteil ausbilden. Die Düsen können positionsveränderlich am Kanal angeordnet sein.

Die Erstreckung eines Kanals des Düsentragteils oder eines Kanals am Düsentragteil kann dessen Richtung oder Erstreckung definieren. Ein Winkel zwischen den Düsentragteilen kann daher bei vorteilhaften Ausführungsformen auch als Winkel zwischen den Kanälen angesehen werden.

Vorzugsweise umfasst die Trocknungsvorrichtung eine Gebläseeinrichtung mit mindestens einem die Düsen mit Trocknungsluft beaufschlagenden Gebläse.

Als günstig erweist es sich, wenn die Gebläseeinrichtung ein Gebläse umfasst, das zwei oder mehr Düsen zugeordnet ist. Alternativ kann vorgesehen sein, dass jeder Düse ein separates Gebläse der Gebläseeinrichtung zugeordnet ist.

Die Gebläseeinrichtung ist günstigerweise an der Halteeinrichtung gehalten und bevorzugt mit dieser höhenverstellbar und/oder um eine Achse quer zur Behandlungsrichtung kippbar. Dies erleichtert die Verlegung von Schläuchen oder Kanälen, um den Düsen die Trocknungsluft zuzuführen.

Es kann vorgesehen sein, dass an jedem Düsentrocknungsteil eine in dessen Längsrichtung erstreckte Schlitzdüse angeordnet ist.

Von Vorteil ist es, wenn die Trocknungsvorrichtung eine Detektionseinrichtung umfasst zum Erfassen der Kontur des Kraftfahrzeuges und eine mit der Detektionseinrichtung und mit der Hubeinrichtung gekoppelte Steuereinrichtung, wobei die Trocknungsvorrichtung in einem derartigen Abstand zur Oberfläche des Kraftfahrzeuges bringbar ist, dass Luftströme der Mehrzahl von Düsen einander oberhalb der Oberfläche überlagern. Dadurch wird sichergestellt, dass alle Bereiche der Oberfläche von Trocknungsluft beaufschlagt werden. Das Trocknungsergebnis kann dadurch verbessert werden.

Insbesondere bei einer Mehrzahl von Düsen an den Düsentragteilen ist es günstig, wenn die Düsentragteile und die daran gehalten Düsen symmetrisch zueinander ausgestaltet und an der Trocknungsvorrichtung angeordnet sind.

Als vorteilhaft erweist es sich, wenn an zumindest einem Düsentragteil dem benachbarten Düsentragteil zugewandt eine Rundstrahldüse angeordnet ist, so dass in der Winkelstellung der Düsentragteile am Scheitelbereich zumindest ein Luftstrom mit Rundstrahldüse bereitstellbar ist.

Ferner kann an der Halteeinrichtung mindestens eine Rundstrahldüse angeordnet sein, um am Scheitelbereich einen Rundstrahl bereitzustellen.

Bei einer vorteilhaften Ausführungsform der Trocknungsvorrichtung kann vorgesehen sein, dass Düsen an einem jeweiligen Düsentragteil positionsveränderlich gehalten sind. Insbesondere besteht die Möglichkeit, dass jede Düse individuell am Düsentragteil verschwenkt und/oder verschoben werden kann. Eine Schwenkachse kann beliebig sein, beispielsweise ist diese eine von der Düse definierte Achse.

Wie bereits erwähnt, betrifft die Erfindung auch eine Fahrzeugwaschanlage. Die eingangs genannte Aufgabe wird durch eine Fahrzeugwaschanlage gelöst, die mindestens eine Trocknungsvorrichtung der vorstehend genannten Art aufweist. Die Vorteile, die bei der Erläuterung der erfindungsgemäßen Trocknungsvorrichtung bereits erwähnt wurden, können mit der Fahrzeugwaschanlage ebenfalls erzielt werden. Diesbezüglich kann auf voranstehende Ausführungen verwiesen werden.

Vorteilhafte Ausführungsformen der Fahrzeugwaschanlage ergeben sich durch vorteilhafte Ausführungsformen der Trocknungsvorrichtung.

Die Fahrzeugwaschanlage kann, wie bereits erwähnt, eine Portalwaschanlage sein. Alternativ kann es sich um eine Waschstraße handeln.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Seitenansicht einer erfindungsgemäßen Fahrzeugwaschanlage in Gestalt einer Portalwaschanlage, welche eine erfindungsgemäße Trocknungsvorrichtung umfasst, sowie ein zu trocknendes Kraftfahrzeug;
- Figur 2:: eine vergrößerte Darstellung der Trocknungsvorrichtung in Figur 1;
- Figur 3:: eine Darstellung entsprechend Figur 2 mit relativ zum Fahrzeug verkippter Trocknungsvorrichtung;
- Figur 4:: eine Draufsicht auf die Fahrzeugwaschanlage und das Kraftfahrzeug in Figur 1, wobei Düsentragteile der Trocknungsvorrichtung in drei unterschiedlichen Relativstellungen dargestellt sind;
- Figur 5:: eine vergrößerte Teildarstellung der Trocknungsvorrichtung, wobei die Düsentragteile eine erste Winkelstellung einnehmen;
- Figur 6:: eine Darstellung entsprechend Figur 5, wobei die Düsentragteile eine Geradstellung einnehmen;
- Figur 7:: eine Darstellung entsprechend Figur 5, wobei die Düsentragteile eine zweite Winkelstellung einnehmen;
- Figur 8:: eine perspektivische Teildarstellung der Trocknungsvorrichtung aus Figur 1, teilweise schematisch;
- Figur 9:: eine perspektivische Teildarstellung einer zweiten bevorzugten Ausführungsform der Trocknungsvorrichtung;
- Figur 10:: eine Draufsicht auf die in Figur 9 gezeigte Trocknungsvorrichtung in Teildarstellung;
- Figur 11:: eine Seitenansicht der Trocknungsvorrichtung aus Figur 9 in Teildarstellung;
- Figur 12:: eine Teildarstellung einer weiteren Ausführungsform einer erfindungsgemäßen Trocknungsvorrichtung;
- Figur 13:: eine schematische Teildarstellung einer weiteren Ausführungsform einer Trocknungsvorrichtung in einer Draufsicht, wobei die Düsentragteile eine Geradstellung einnehmen;
- Figur 14:: eine schematische Teildarstellung einer weiteren Ausführungsform einer Trocknungsvorrichtung in einer Draufsicht, wobei die Düsentragteile eine Winkelstellung einnehmen;
- Figur 15:: eine Teildarstellung einer weiteren Ausführungsform einer Trocknungsvorrichtung in einer Draufsicht, wobei die Düsentragteile eine Geradstellung einnehmen;
- Figur 16:: die Trocknungsvorrichtung aus Figur 15, wobei die Düsentragteile eine Winkelstellung einnehmen;
- Figur 17:: eine Teildarstellung einer weiteren Ausführungsform einer Trocknungsvorrichtung in einer Draufsicht, wobei die Düsentragteile eine Geradstellung einnehmen;
- Figur 18:: die Trocknungsvorrichtung aus Figur 17, wobei die Düsentragteile eine Winkelstellung einnehmen;
- Figur 19:: eine Teildarstellung einer weiteren Ausführungsform einer Trocknungsvorrichtung in einer Draufsicht, wobei die Düsentragteile eine Geradstellung einnehmen;
- Figur 20:: die Trocknungsvorrichtung aus Figur 19, wobei die Düsentragteile eine Winkelstellung einnehmen;
- Figur 21:: eine Teildarstellung einer weiteren Ausführungsform einer Trocknungsvorrichtung in einer Draufsicht, wobei die Düsentragteile eine Geradstellung einnehmen;
- Figur 22:: die Trocknungsvorrichtung aus Figur 21, wobei die Düsentragteile eine Winkelstellung einnehmen;
- Figur 23:: eine Teildarstellung einer weiteren Ausführungsform einer Trocknungsvorrichtung in einer Draufsicht, wobei die Düsentragteile eine Geradstellung einnehmen;
- Figur 24:: die Trocknungsvorrichtung aus Figur 23, wobei die Düsentragteile eine Winkelstellung einnehmen;
- Figur 25:: schematisch in Winkelstellung angeordnete Düsentragteile bei einer weiteren Ausführungsform;
- Figur 26:: schematisch in Winkelstellung angeordnete Düsentragteile bei einer weiteren Ausführungsform;
- Figur 27:: schematisch in Winkelstellung angeordnete Düsentragteile bei einer weiteren Ausführungsform;
- Figur 28:: schematisch in Winkelstellung angeordnete Düsentragteile bei einer weiteren Ausführungsform;
- Figur 29:: schematisch eine Teildarstellung einer weiteren Ausführungsform einer Trocknungsvorrichtung in einer Draufsicht, wobei die Düsentragteile eine Geradstellung einnehmen;
- Figur 30:: die Trocknungsvorrichtung aus Figur 29, wobei die Düsentragteile eine Winkelstellung einnehmen;
- Figur 31:: schematisch eine Teildarstellung einer weiteren Ausführungsform einer Trocknungsvorrichtung in einer Draufsicht, wobei die Düsentragteile eine Geradstellung einnehmen; und
- Figur 32:: die Trocknungsvorrichtung aus Figur 31, wobei die Düsentragteile eine Winkelstellung einnehmen.

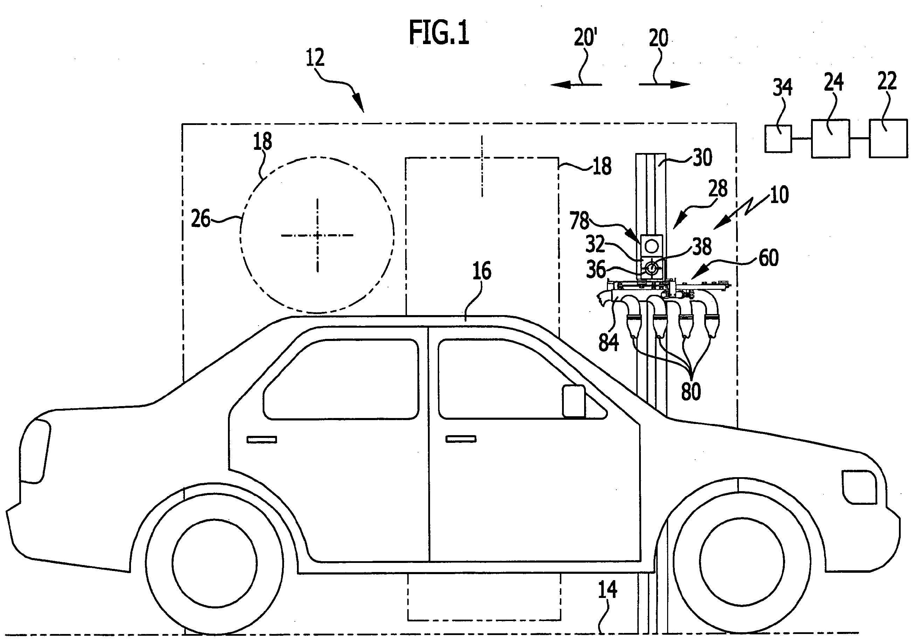

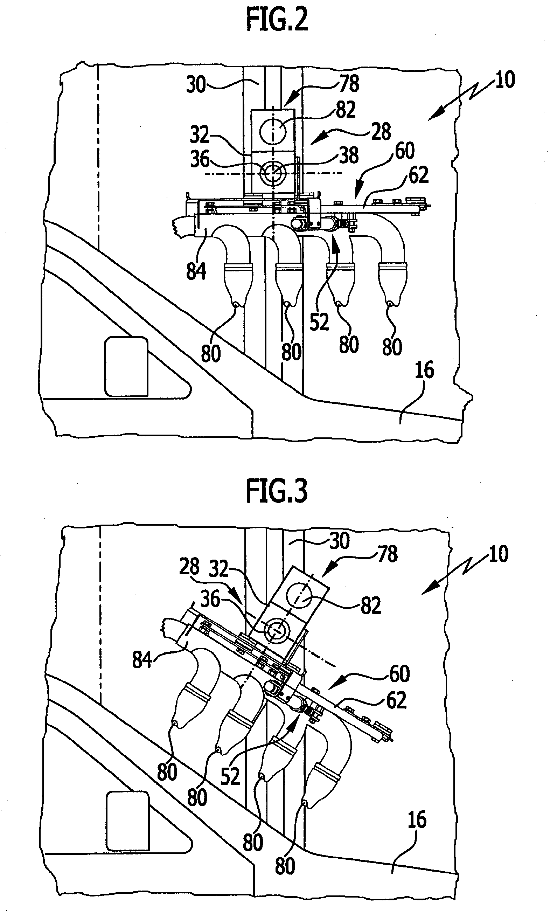

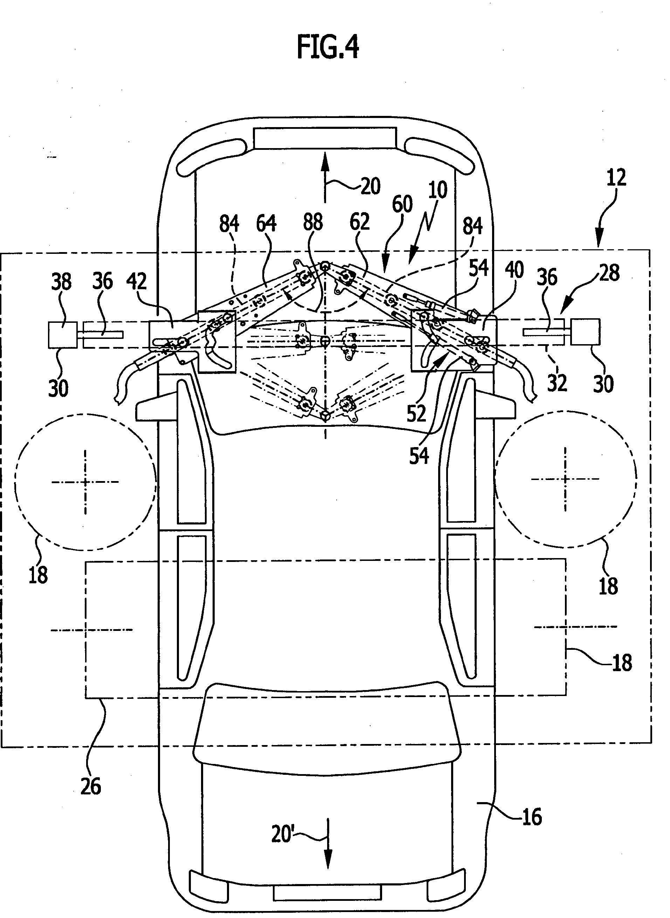

Die Figuren 1 bis 8 zeigen eine mit dem Bezugszeichen 10 belegte erste vorteilhafte Ausführungsform einer erfindungsgemäßen Trocknungsvorrichtung zur Verwendung in einer erfindungsgemäßen Fahrzeugwaschanlage 12, die in den Figuren 1 und 4 schematisch dargestellt ist. Mit der Fahrzeugwaschanlage 12 kann ein auf einer Aufstellfläche 14 positioniertes Kraftfahrzeug 16 mittels Reinigungsaggregaten 18 zunächst gereinigt und anschließend mit der Trocknungsvorrichtung 10 getrocknet werden.

Die Fahrzeugwaschanlage 12 ist als Portalwaschanlage ausgestaltet, die in mehreren Überläufen über das Kraftfahrzeug 16 hinwegbewegt wird, wobei die Zeichnung das Waschportal der Fahrzeugwaschanlage 12 in einer Behandlungsrichtung 20 darstellt. Vorliegend wird das Waschportal in der Behandlungsrichtung 20 von dem Heck zu der Front des Kraftfahrzeuges 16 bewegt, um dieses zu trocknen. Die Behandlungsrichtung kann auch umgekehrt werden, damit das Kraftfahrzeug 16 von der Front zu dem Heck getrocknet werden kann.

Die Trocknungsvorrichtung 10 ist eine Dachtrocknungsvorrichtung zum Trocknen von nach oben weisenden Oberflächen des Fahrzeuges 10. Hierzu zählt insbesondere das Dach, jedoch kann mit der Trocknungsvorrichtung 10 auch die Motorhaube, die Frontscheibe, die Heckscheibe, der Kofferraumdeckel und die Front sowie das Heck des Fahrzeuges 16 getrocknet werden.

Die Trocknungsvorrichtung 10 umfasst eine in Figur 1 schematisch dargestellte Detektionseinrichtung 22, die mit einer Steuereinrichtung 24 gekoppelt ist. Die Steuereinrichtung 24 dient zum Steuern der nachfolgend noch erwähnten Antriebe der Trocknungsvorrichtung 10.

Mit der Detektionseinrichtung 22 kann die Kontur des Fahrzeuges 16 erfasst und die diesbezügliche Information dem Trocknungsvorgang zugrunde gelegt werden. Beispielsweise erfasst die Detektionseinrichtung 22 die Kontur vor oder während eines Waschganges. Zu diesem Zweck kann zum Beispiel anhand des von einer Dachbürste 26 benötigten Motorstroms die Kontur abgeleitet werden. Auch der Einsatz von Lichtschranken ist möglich. Bei der Konturerfassung wird beispielsweise festgestellt, wie unterschiedliche Oberflächen des Fahrzeuges 16 zueinander ausgerichtet sind. Es können die Übergangsbereiche zwischen im Winkel zueinander ausgerichteten Oberflächen ermittelt werden, beispielsweise beim Übergang von der Motorhaube zur Frontscheibe, von dieser zum Dach, von diesem zur Heckscheibe und von dieser zum Kofferraumdeckel.

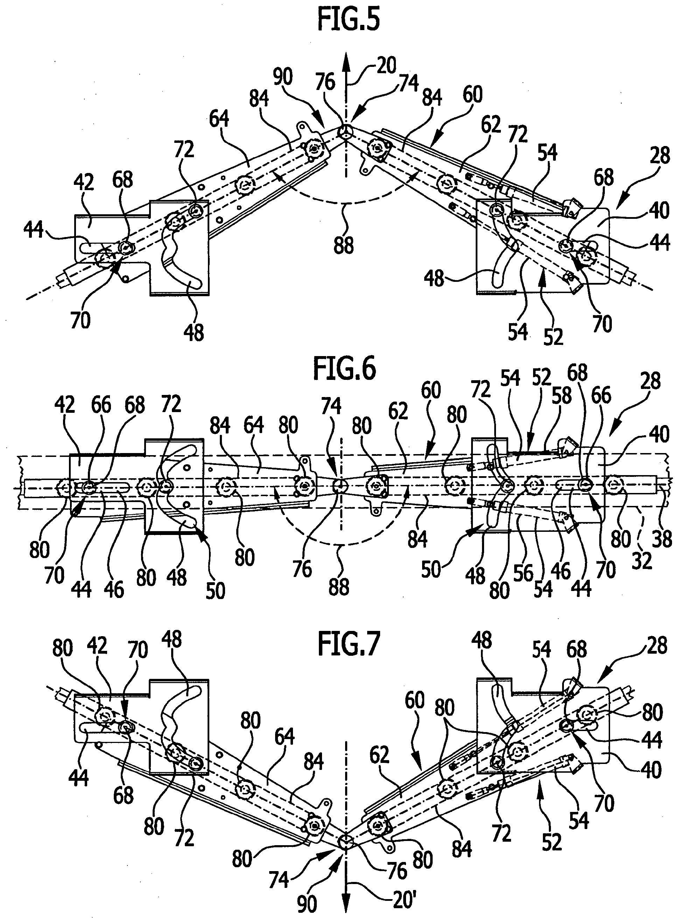

Die Trocknungsvorrichtung 10 weist eine am Waschportal angeordnete Halteeinrichtung 28 auf, die zwei Vertikalträger 30 und einen Querträger 32 umfasst. Der Querträger 32 ist in der Zeichnung nur schematisch oder durch seine Kontur dargestellt und in den Figuren 5 und 7 ausgeblendet. Die Vertikalträger 30, die beispielsweise Bestandteile des Waschportals sein können, sind im Abstand zueinander positioniert und über den Querträger 32 miteinander verbunden. "Querrichtung" bezieht sich auf eine Richtung quer zur Behandlungsrichtung 20 und parallel zur Aufstellfläche 14.

Die Trocknungsvorrichtung 10 umfasst eine Hubeinrichtung 34 zum Anheben und Absenken des Querträgers 32 an den Vertikalträgern 30. Die Hubeinrichtung 34 ist von der Steuereinrichtung 24 ansteuerbar.

Weiter umfasst die Trocknungsvorrichtung 10 eine Kippeinrichtung 36 (Figur 4). Über die Kippeinrichtung 36 kann der Querträger 32 relativ zu den Vertikalträgern 30 um eine in Querrichtung verlaufende Achse 38 gekippt werden. Die Kippeinrichtung 36 ist von der Steuereinrichtung 24 ansteuerbar.

Abhängig von der ermittelten Kontur des Fahrzeuges 16 können die Hubeinrichtung 34 und die Kippeinrichtung 36 angesteuert werden, damit die nachfolgend noch erwähnten Düsen der Trocknungsvorrichtung 10 der Kontur des Fahrzeuges 16 folgen, um ein möglichst gutes Trocknungsergebnis zu erzielen.

Zusätzlich zum Querträger 32 umfasst die Halteeinrichtung 28 zwei Halteteile 40, 42. Die Halteteile 40, 42 sind in Querrichtung voneinander beabstandet und am Querträger 32 festgelegt. Beispielsweise sind die Halteteile 40, 42 unter Einsatz eines gekanteten Flachmaterials gefertigt, beispielsweise einem Metallblech.

An den Halteteilen 40, 42 ist jeweils ein Lagerelement 44 für eine kombinierte Schwenk- und Verschiebebewegung der nachfolgend noch erwähnten Düsentragteile gebildet. Das Lagerelement 44 ist eine Führung 46, ausgestaltet als in Querrichtung ausgerichtetes Langloch.

Weiter ist an jedem Halteteil 40, 42 eine Führungskulisse 48 einer Zwangsführung 50 gebildet zum Zusammenwirken mit einem Führungselement der Düsentragteile. Die Führungskulisse 48 am Halteteil 40 ist im Wesentlichen in Form eines V gebildet mit zwei bogenförmigen, aufeinander zulaufenden und sich gewissermaßen in der Mitte des V vereinigenden Kulissenabschnitten. In der Mitte weist die Führungskulisse 48 des Halteteiles 40 einen Knick auf. Die Führungskulisse 48 ist so am Halteteil 40 angeordnet, dass das V in Richtung auf das Halteteil 42 geöffnet ist.

Die Führungskulisse 48 des Halteteils 42 ist im Wesentlichen W-förmig gebildet und so angeordnet, dass das W in Richtung auf das Halteteil 40 geöffnet ist. Die Führungskulisse 48 weist zwei sich vereinigende gekrümmte Kulissenabschnitte auf, so dass auch die W-förmige Führungskulisse 48 in der Mitte einen Knick umfasst.

Die Trocknungsvorrichtung 10 umfasst ferner eine Verstelleinrichtung 52, die von der Steuereinrichtung 24 ansteuerbar ist. Vorliegend umfasst die Verstelleinrichtung 52 zwei Stellorgane 54, ausgestaltet als pneumatische Kolben-Zylinder-Aggregat 56 bzw. 58. Diese können von einer nicht dargestellten Pneumatikanlage mit Druck beaufschlagt werden.

Die Kolben-Zylinder-Aggregate 56, 58 sind am Halteteil 40 an einander gegenüberliegenden Seiten von dessen Führung 46 mit einem ersten Ende festgelegt.

Die Trocknungsvorrichtung 10 umfasst eine an der Halteeinrichtung 28 gehaltene Düsentrageinrichtung 60, die vorliegend insbesondere zwei Düsentragteile 62, 64 umfasst. Das Düsentragteil 60 ist dem Halteteil 40 zugeordnet und an diesem bewegbar gelagert. Das Düsentragteil 64 ist dem Halteteil 42 zugeordnet und an diesem bewegbar gelagert. Die Düsentragteile sind beispielsweise unter Einsatz von gekanteten Flachmaterialien gefertigt, zum Beispiel aus einem Metallblech.

Wie insbesondere aus den Figuren 5 bis 8 hervorgeht, sind die Düsentragteile im Wesentlichen längserstreckt ausgestaltet und dabei leicht konisch zulaufend, wobei auch eine geradlinige Ausgestaltung denkbar ist.

Die Düsentragteile 62, 64 weisen Lagerelemente 66 zum Zusammenwirken mit den Lagerelementen 44 auf. Vorliegend sind die Lagerelemente 66 Lagerzapfen 68, die gemeinsam mit der Führung 46 ein Schwenklager 70 ausbilden. Aufgrund der Form der Führung 46 als Langloch ist das Schwenklager 70 in Querrichtung positionsveränderlich. Die Düsentragteile 62, 64 können dadurch relativ zu den Halteteilen 40 bzw. 42 verschwenken, wobei gleichzeitig eine Verschiebung in Querrichtung erfolgen kann, aufgrund der positionsveränderlichen Schwenklager 70.

Die Zwangsführung 50 umfasst an den Düsentragteilen 62, 64 Führungselemente 72, die in die Führungskulissen 48 der Halteteile 40 und 42 eingreifen. Bei der Schwenk- und Verschiebebewegung der Düsentragteile 60, 64 an den Halteteilen 40, 42 ist dadurch aufgrund der Zwangsführung 50 die Bewegung klar definiert.

Die Kolben-Zylinder-Aggregate 56, 58 greifen mit ihrem jeweiligen dem Halteteil 40 abgewandten Ende am Düsentragteil 62 an. Abhängig von einer Längenänderung der Kolben-Zylinder-Aggregate 56, 58, worauf nachfolgend noch eingegangen wird, ist dadurch eine Verschwenkung der Düsentragteile 62, 64 bei gleichzeitiger Verschiebung möglich.

Die Trocknungsvorrichtung 10 umfasst eine Kopplungseinrichtung 74. Damit ist die Möglichkeit gegeben, eine Bewegung des Düsentragteils 62 auf das Düsentragteil 64 zu übertragen. Dieses kann dadurch in Bewegung versetzt werden, ohne dass ein Stellorgan der Verstelleinrichtung 52 am Halteteil 42 und am Düsentragteil 64 anzugreifen braucht.

Vorliegend umfasst die Kopplungseinrichtung 74 ein zwischen den Düsentragteilen 62, 64 gebildetes Gelenk 76. Das Gelenk 76 ist jeweils endseitig an den Düsentragteilen 62, 64 dem jeweils anderen Düsentragteil 64, 62 zugewandt angeordnet.

Eine Gelenkachse des Gelenkes 76 verläuft quer zur Behandlungsrichtung 20 und zur Querrichtung. Entsprechendes gilt für die von den Lagerzapfen 68 definierten Schwenkachsen.

Zum Aufbringen von Trocknungsluft auf die Oberfläche des Fahrzeugs 16 umfasst die Trocknungsvorrichtung 10 eine Gebläseeinrichtung 78 und eine Mehrzahl von Düsen 80. Die Gebläseeinrichtung 78 (Figuren 1 bis 3) ist vorzugsweise an der Halteeinrichtung 28 und insbesondere deren Querträger 32 festgelegt. Dies erleichtert die Verlegung von etwaigen Schläuchen oder Kanälen, um den Düsen 80 Trocknungsluft zuzuführen. Die Gebläseeinrichtung 78 umfasst mindestens ein Gebläse 82, wobei vorliegend beispielsweise zwei Gebläse 82 vorgesehen sein können, deren jeweils eines den Düsen 80 an einem der Düsentragteile 60, 64 zugeordnet ist.

Die Düsen 80 sind mittelbar an den Düsentragteilen 62, 64 gehalten. Zu diesem Zweck weist die Trocknungsvorrichtung 10 jeden Düsentragteil 62, 64 zugeordnet einen Kanal 84 auf, an dem austrittsseitig Düsen 80 angeordnet sind. Vorliegend sind an jedem Kanal 84 austrittseitig vier Düsen 80 angeordnet. Eintrittseitig ist der Kanal 84 über eine in der Zeichnung nicht dargestellte Schlauchleitung mit einem Gebläse 82 verbunden.

Die Kanäle 84 sind längserstreckt ausgestaltet und verlaufen in Längsrichtung der Düsentragteile 62 bzw. 64. Ein Winkel zwischen den Kanälen 84 entspricht dadurch auch einem Winkel zwischen den Düsentragteilen 62, 64. Kanalabschnitte zweigen von einem Hauptkanal ab, um eine jeweilige endseitig angeordnete Düse 80 zu beaufschlagen. Die Kanäle 84 weisen dadurch eine ungefähr kammförmige Gestalt auf.

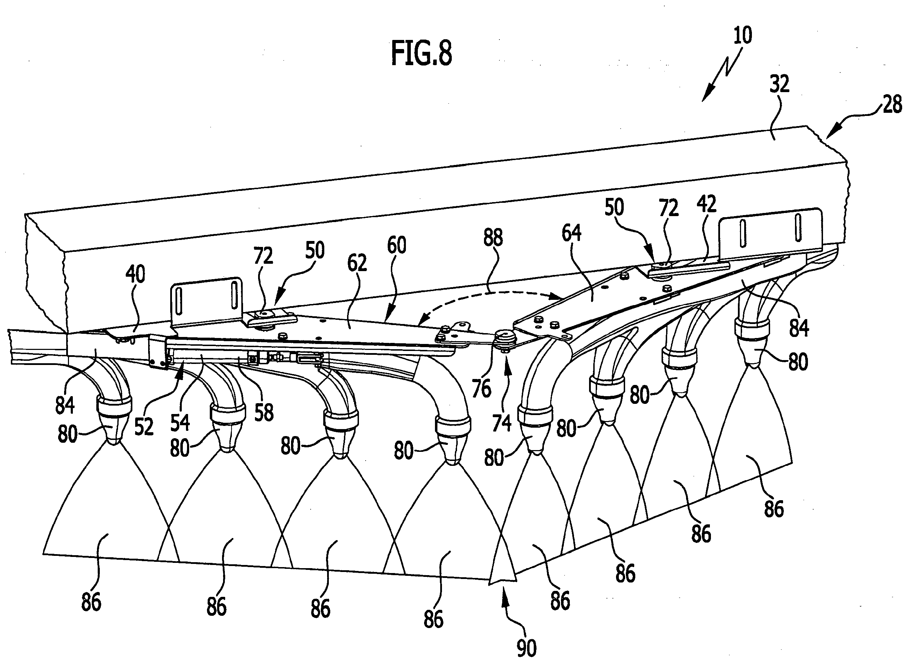

Die Düsen 84 sind bei der Trocknungsvorrichtung 10 Flachstrahldüsen, die jeweils einen sich fächerförmig ausbreitenden Luftstrom 86 bereitstellen. Ein Öffnungswinkel des Luftstroms 86 an der Düse 80 ist beispielsweise ungefähr 45° bis 60°. Luftströme 86, die von den Düsen 80 eines Kanals 84 bereitgestellt werden, liegen im Wesentlichen in einer Ebene (Figur 8).

Mit dem jeweiligen Düsentragteil 62, 64 ist der Kanal 84 zum Beispiel durch Verschraubung verbunden, so dass er für Wartungszwecke auf einfache Weise entfernt werden kann. Der Kanal 84 ist an der dem Halteteil 40 oder 42 gegenüberliegenden Seite am Düsentragteil 62 bzw. 64 angeordnet.

Nachfolgend wird unter Verweis insbesondere auf die Figuren 4 bis 8 auf die Funktionsweise und die Vorteile der Trocknungsvorrichtung 10 und der Fahrzeugwaschanlage 12 eingegangen.

Die Düsentragteile 62, 64 können unterschiedliche Relativstellungen einnehmen, in denen sie zueinander unter unterschiedlichen Winkeln ausgerichtet sind. Als Winkel wird vorliegend, siehe die Figuren 5, 6 und 8, ein auf der der Behandlungsrichtung 20 abgewandten Seite zwischen den Düsentragteilen 62, 64 gebildeter Winkel 88 angesehen. Dies ist der kleinere der beiden Winkel zwischen den Düsentragteilen 62, 64.

Eine erste Relativstellung der Düsentragteile 62, 64 ist eine Geradstellung, die in Figur 6 dargestellt ist. In der Geradstellung fluchten die Düsentragteile 62, 64 miteinander, so dass die Düsentrageinrichtung 60 im Wesentlichen geradlinig ausgestaltet ist. Der Winkel 88 zwischen den Düsentragteilen 62, 64 ist 180°. Aufgrund der Knicke in den Führungskulissen 48 der Zwangsführungen 50 ist die Geradstellung der Düsentragteile 62, 64 besonders gut definiert. In der Geradstellung sind die Düsentragteile 62, 64 quer zur Behandlungsrichtung 20 ausgerichtet.

Die Geradstellung wird insbesondere dann eingenommen, wenn die Trocknungsvorrichtung 10 außer Betrieb platzsparend zu verstauen ist. Besonders vorteilhaft erweist sich die Geradstellung der Düsentragteile 62, 64 auch dann, wenn die Front oder das Heck des Kraftfahrzeuges 16 getrocknet werden sollen.

Insbesondere ist auch eine Geradstellung dann von Vorteil, wenn an Übergangsbereichen zwischen im Winkel zueinander angeordneten Oberflächen des Fahrzeuges 16 eine Verschwenkung des Querträgers 32 vorgenommen werden soll, wobei die Düsen 80 nah an der Kraftfahrzeugoberfläche angeordnet sind. Aufgrund der Geradstellung wird zum Verschwenken weniger Platz benötigt, so dass die Düsen 80 zum Erzielen eines vorteilhaften Trocknungsergebnisses möglichst nah an der Oberfläche des Fahrzeuges 16 vorbeigeführt werden können, und dennoch ist der erforderliche Raum zum Schwenken des Querträgers 32 verhältnismäßig gering.

Mittels der Verstelleinrichtung 52 können die Düsentragteile 62, 64 in eine weitere Relativstellung überführt werden, von denen eine in Figur 5 dargestellt ist und nachfolgend als Winkelstellung bezeichnet ist. Insbesondere ist eine Mehrzahl von Winkelstellungen vorgesehen, bei denen die Düsentragteile 62, 64 unter einem Winkel 88 ausgerichtet sind, der kleiner ist als 180°. Beispielsweise können die Düsentragteile 62, 64 so zueinander abgewinkelt werden, dass der Winkel 88 bis ungefähr 100° beträgt. Relativ zur Querrichtung ist jedes Düsentragteil 62, 64 dabei um einen Betrag von bis zu 40° abgewinkelt. Bei einer Umsetzung der Trocknungsvorrichtung 10 in der Praxis erweist sich ein Winkel 88 von ungefähr 110° als vorteilhaft.

Zum Überführen der Düsentragteile 62, 64 in die Winkelstellung steuert die Steuereinrichtung 24 die Verstelleinrichtung 52 an, das Kolben-Zylinder-Aggregat 56 auszufahren. Dadurch verschwenkt das Düsentragteil 62 am Schwenklager 70 relativ zum Halteteil 40. Gleichzeitig wird das Düsentragteil 62 in Querrichtung auf das Düsentragteil 64 zu verschoben, indem das Schwenklager 70 in der Langlochführung 46 verschiebt und das Führungselement 72 die Führungskulisse 48 am Halteteil 40 durchfährt.

Aufgrund der Kopplungseinrichtung 74 über das Gelenk 76 verschwenkt das Düsentragteil 64 am Schwenklager 70 relativ zum Halteteil 42. Zusätzlich erfolgt eine Verschiebung in Richtung auf das Düsentragteil 62 durch die Verschiebung des Schwenklagers 70 in der Langlochführung 46 und dem Durchfahren der Führungskulisse 48 am Halteteil 42 durch das Führungselement 72.

Die Düsentragteile 62, 64 nehmen dann die in den Figuren 4 (durchgezogen) und 5 dargestellte Winkelstellung ein. In der Winkelstellung weist die Düsentrageinrichtung 60 eine in der Behandlungsrichtung 20 keilförmige Gestalt auf. Die Ebenen der Luftströme 86 der Düsen 80 werden ebenfalls zueinander verschwenkt. Die von den Luftströmen 86 gebildete auf das Fahrzeug 16 treffende Front an Trocknungsluft ist ebenfalls keilförmig (Figur 8). Dadurch wird erreicht, dass die Luftströme 86 in der Behandlungsrichtung 20 führend einen Scheitelbereich 90 aufweisen oder bilden. Am Scheitelbereich 90 überlagern die Luftströme 86 von zwei Düsen 80 miteinander, deren jeweils eine an einem Düsentragteil 62, 64 angeordnet ist.

Wird die Trocknungsvorrichtung 10 in der Behandlungsrichtung 20 bewegt, führt das Vorsehen der keilförmig gebildeten Front von Luftströmen mit dem Scheitelbereich 90 dazu, dass Flüssigkeit von der Fahrzeugoberfläche nach außen weggetrieben wird. Dies liefert ein besseres Trocknungsergebnis. Insbesondere wird ein Spritzen von in Spalten an der Fahrzeugoberfläche angeordneter Flüssigkeit weitgehend vermieden.

Als vorteilhaft erweist es sich, dass die Düsentragteile 62, 64 relativ zu den Halteteilen 40 bzw. 42 nicht nur verschwenkt werden, sondern auch aufeinan der zu verschoben werden, wenn die Düsentragteile 62, 64 in die Winkelstellung überführt werden. Dadurch ist sichergestellt, dass sich die Düsen 80, wie anderenfalls bei Verschwenken der Düsentragteile 62, 64 allein, nicht voneinander wegbewegen und die Front der Luftströme 86 mittig zwischen den Düsentragteilen 62, 64 eine Lücke aufweist. Stattdessen wird der Scheitelbereich 90 in der Winkelstellung der Düsentragteile 62, 64 gebildet und auch in unterschiedlichen Winkelstellungen beibehalten. Über die Verschiebungsbewegung der Düsentragteile 62, 64 hinaus erweist sich auch die Kopplungseinrichtung 74 mit dem Gelenk 76 als vorteilhaft, um diese Wirkung zu erzielen.

Bei der Trocknungsvorrichtung 10 können unterschiedliche Winkelstellungen eingenommen werden, je nachdem wie weit das Kolben-Zylinder-Aggregat 56 ausgefahren wird. Es kann zum Beispiel vorgesehen sein, dass abweichend von den vorherigen Ausführungen Übergangsbereiche zwischen Fahrzeugflächen von der Trocknungsvorrichtung 10 so abgefahren werden, dass die Düsentragteile 62, 64 am Übergangsbereich einen größeren Winkel 88 zueinander einnehmen als im Abstand zum Übergangsbereich.

Der Winkel 88 kann insbesondere abhängig von der Kontur des Fahrzeugs 16 eingestellt werden, in dem die Steuereinrichtung 24 die Verstelleinrichtung 52 in geeigneter Weise ansteuert.

Wie erwähnt kann die Behandlungsrichtung 20 umgekehrt werden, worauf nachfolgend unter Verweis insbesondere auf Figur 7 eingegangen wird. Darin ist die Behandlungsrichtung mit dem Bezugszeichen 20' gekennzeichnet.

Verfährt die Trocknungsvorrichtung 10 mit dem Waschportal in entgegengesetzter Behandlungsrichtung 20', ist es möglich, auch in der Behandlungsrichtung 20' einen Scheitelbereich 90 auszubilden, wenn die Düsentragteile 62, 64 eine Winkelstellung einnehmen. Das Bezugszeichen 88' kennzeichnet in Figur 7 den Winkel zwischen den Düsentragteilen 62, 64.

Bei Verfahren in der Behandlungsrichtung 20' wird anstelle des Kolben-Zylinder-Aggregates 56 das Kolben-Zylinder-Aggregat 58 ausgefahren. Die Düsentragteile 62, 64 verschwenken relativ zu den Halteteilen 40 bzw. 42 in umgekehrter Richtung, wie vorstehend erläutert, wobei auch in diesem Fall gleichzeitig eine Verschiebung der Düsentragteile 62, 64 in Querrichtung aufeinander zu erfolgt.

Auch beim Verfahren in der Behandlungsrichtung 20' lässt sich dadurch eine keilförmige Gestalt der Düsentrageinrichtung 60 mit keilförmiger Front der Luftströme 86 einschließlich dem Scheitelbereich 90 zum Erzielen einer besseren Trocknungswirkung bereitstellen.

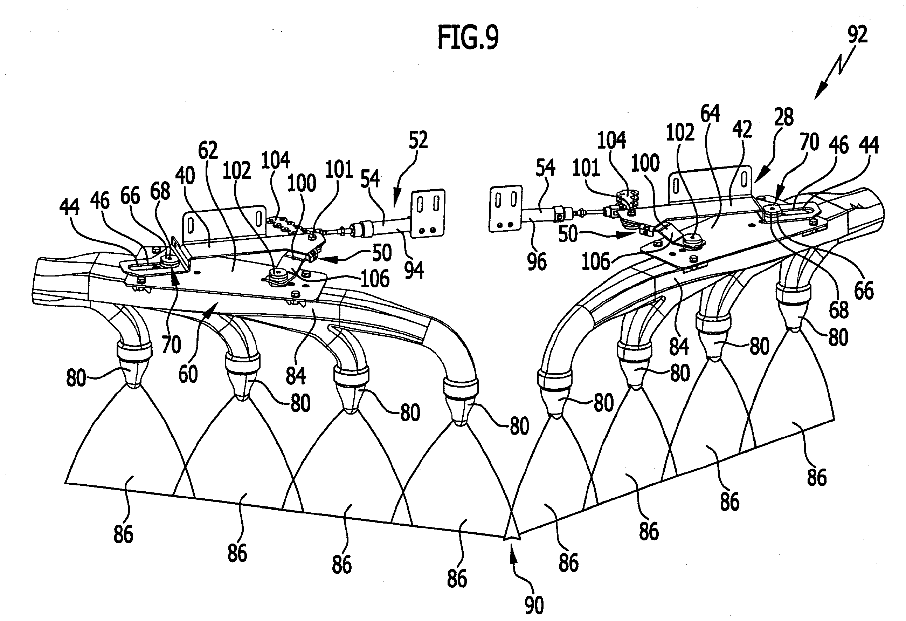

Eine in den Figuren 9 bis 11 dargestellte zweite vorteilhafte Ausführungsform einer erfindungsgemäßen Trocknungsvorrichtung ist mit dem Bezugszeichen 92 belegt. Die Trocknungsvorrichtung 92 ist nur teilweise dargestellt, es fehlen beispielsweise die Vertikalträger 30 und der Querträger 32. Für gleiche oder gleichwirkende Merkmale und Bauteile, wie bei der Trocknungsvorrichtung 10, werden identische Bezugszeichen benutzt.

Bei der Trocknungsvorrichtung 32 entfallen von der Zwangsführung 50 die Führungskulissen 48 an den Halteteilen 40, 42, sowie die Kopplungseinrichtung 74.

Die Verstelleinrichtung 52 umfasst Stellorgane 54, wobei jedem Halteteil 40, 42 ein Kolben-Zylinder-Aggregat 94 bzw. 96 zugeordnet ist. Die Kolben-Zylinder-Aggregate 94, 96 sind mit einem ersten Ende an einem Fixierelement 98 festgelegt, das ebenso wie die Halteteile 40, 42 am Querträger 32 gehalten ist (nicht dargestellt).

Bei den Düsentragteilen 62, 64 entfallen die Führungselemente 72. Stattdessen weist die Zwangsführung 50 jeweils ein Gelenkglied 100 auf, das an den Halteteilen 40, 42 und den Düsentragteilen 62 bzw. 64 angelenkt ist. Die Bezugszeichen 101 bzw. 102 kennzeichnen die jeweiligen Gelenke an den Halteteilen 40, 42 bzw. den Düsentragteilen 62, 64.

Die den Fixierelementen 98 abgewandten Enden der Kolben-Zylinder-Aggregate 94, 96 sind an dem jeweiligen Gelenkglied 100 festgelegt. Hierzu weist das jeweilige Gelenkglied 100 einen Fixierabschnitt 104 auf, der vorliegend von dem die Gelenke 101, 102 verbindenden Verbindungsabschnitt 106 des Gelenkgliedes 100 absteht. Es ist jedoch auch denkbar, dass die Kolben-Zylinder-Aggregate 94, 96 direkt am Verbindungsabschnitt 106 angreifen und dass kein Fixierabschnitt 104 vorhanden ist. Anders als in der Zeichnung dargestellt kann auch vorgesehen sein, dass der Fixierabschnitt 104 mit dem Verbindungsabschnitt 106 fluchtet. Vorliegend beträgt ein Winkel zwischen dem Fixierabschnitt 104 und dem Verbindungsabschnitt 106 ungefähr 120°.

Am Fixierabschnitt 104 ist eine Mehrzahl unterschiedlicher Angriffspunkte 108 vordefiniert, an denen ein Kolben-Zylinder-Aggregat 94, 96 angreifen kann. Je nachdem, wo das Kolben-Zylinder-Aggregat 94, 96 angreift, lässt sich dadurch der Schwenkbereich des Düsentragteils 62, 64 relativ zum Halteteil 40 bzw. 42 vorgeben.

Im Übrigen kann auf die obigen Ausführungen verwiesen werden. Auch bei der Trocknungseinrichtung 92 kann eine Schwenk- und Verschiebebewegung der Düsentragteile 62, 64 erfolgen. In einer Winkelstellung derselben, die vorliegend insbesondere durch die Richtung der Kanäle 84 definiert wird, kann ein Scheitelbereich 90 der Luftströme 86 ausgebildet werden.

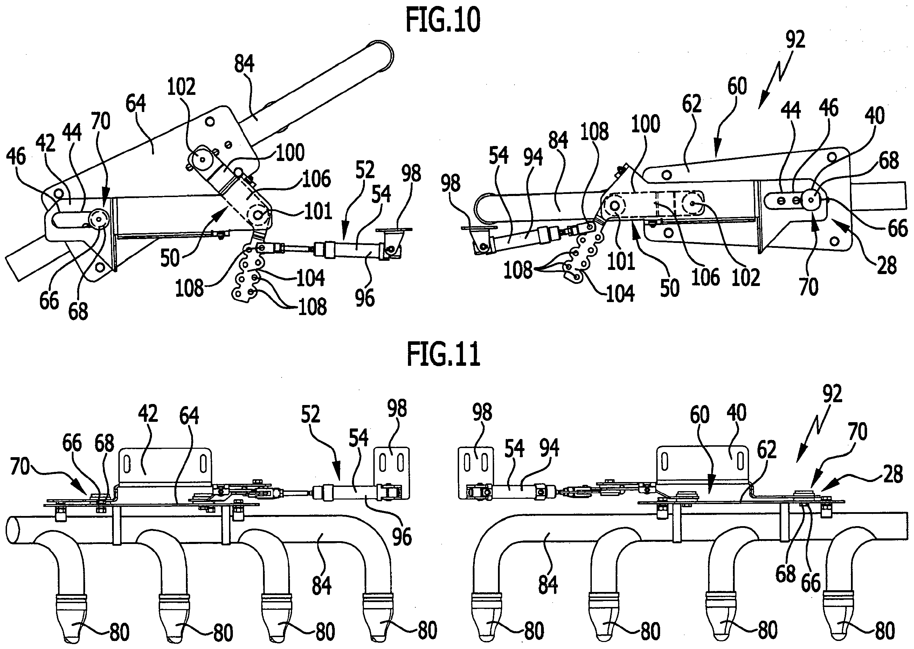

Die Figuren 10 und 11 stellen die Trocknungsvorrichtung 92 in einer Weise dar, in der das Düsentragteil 64 bereits in die Winkelstellung verschwenkt ist, dass Düsentragteil 62 jedoch noch in der Geradstellung gezeigt ist. Es versteht sich, dass dies nur der besseren Erläuterung der Erfindung dient. Beim Einsatz der Trocknungsvorrichtung 92 können die Düsentragteile 62, 64 gemeinsam und synchron verschwenkt und in eine Geradstellung oder eine jeweilige Winkelstellung gebracht werden. Zu diesem Zweck können beide Kolben-Zylinder-Aggregate 94, 96 von der Steuereinrichtung 24 angesteuert werden.

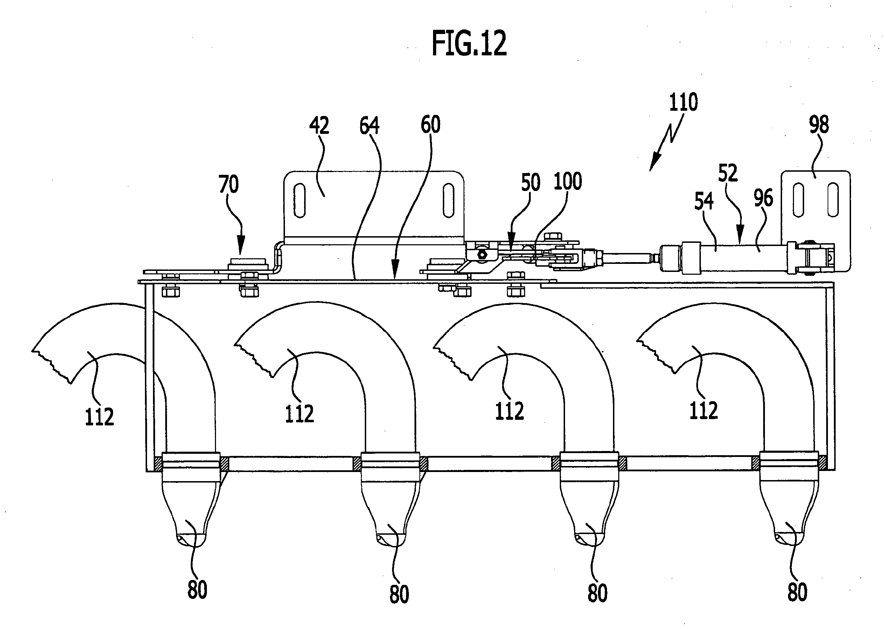

Eine in Figur 12 nur teilweise dargestellte erfindungsgemäße Trocknungsvorrichtung 110 zeigt nur ein Halteteil 42 und ein Düsentragteil 64 und ist ähnlich aufgebaut wie die Trocknungsvorrichtung 92. Der wesentliche Unterschied besteht darin, dass die Düsen 80 an dem Düsentragteil 64 einzeln festgelegt sind. Jeweilige Kanäle 112 beaufschlagen die Düsen 80. Jedem Kanal 112 kann ein eigenes Gebläse 82 zugeordnet sein. Es kann auch vorgesehen sein, dass die Kanäle 112 sich vereinigen, beispielsweise an einer Austrittsseite eines gemeinsamen Gebläses 82.

Das korrespondierende Halteteil 40 und das korrespondierende Düsentragteil 62 sind bei der Trocknungsvorrichtung 110 nicht dargestellt, jedoch entsprechend wie in Figur 12 gezeigt ausgestaltet. Die Kinematik der Schwenk- und Verschiebebewegung der Düsentragteile 60, 62 ist identisch zu derjenigen der Trocknungsvorrichtung 92.

Bei nachfolgend erläuterten Ausführungsformen der erfindungsgemäßen Trocknungsvorrichtung werden nur die wesentlichen Unterschiede zur Trocknungsvorrichtung 10 oder 92 erläutert. Die mit diesen erzielbaren Vorteile können ebenfalls erzielt werden.

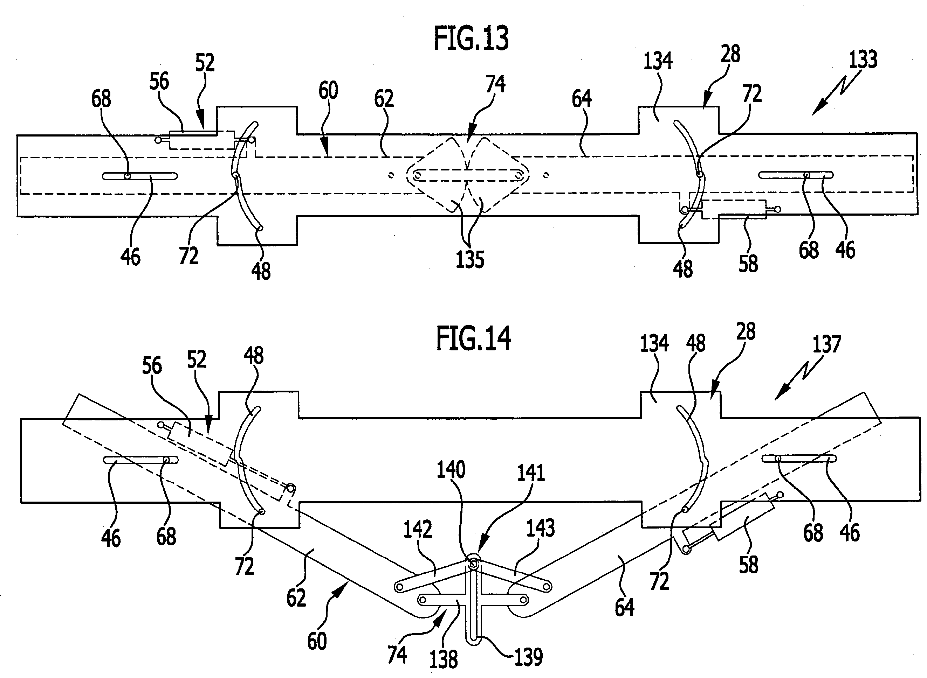

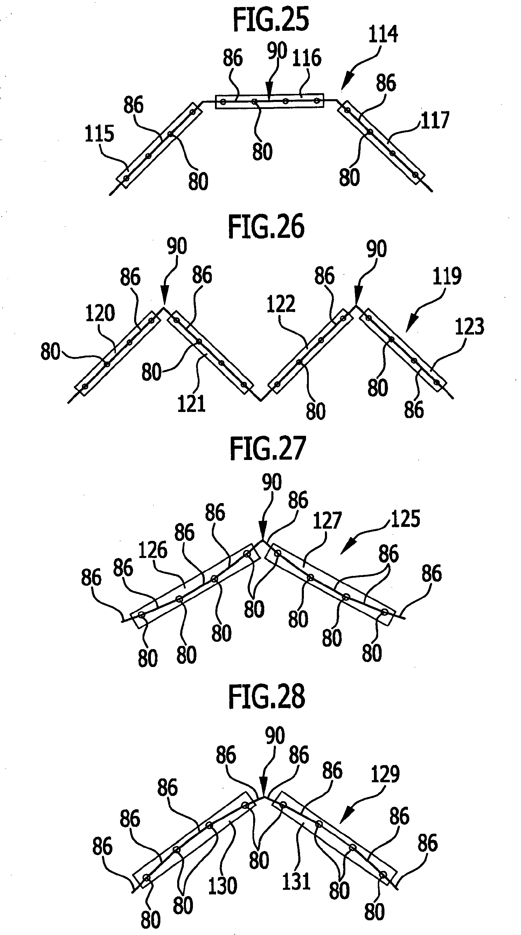

Bevor nachfolgend auf weitere Konstruktionsvarianten der Halteeinrichtung 28 und der Düsentrageinrichtung 60 in den Figuren 13 bis 32 eingegangen wird, wird zunächst auf die schematischen Darstellungen der Figuren 25 bis 28 verwiesen. Die Figuren 25 bis 28 zeigen Düsentrageinrichtungen von vorteilhaften Ausführungsformen nicht weiter dargestellter erfindungsgemäßer Trocknungsvorrichtungen, bei denen insbesondere auf die Düsentragteile und die Anordnung daran gehaltener Düsen eingegangen wird.

Bei der Düsentrageinrichtung 114 in Figur 25 sind drei Düsentragteile 115, 116 und 117 vorgesehen mit jeweils mindestens einer Düse 80. In der Winkelstellung sind die Düsentragteile 115 bis 117 derart zueinander ausgerichtet, dass die Düsentrageinrichtung eine trapezförmige Gestalt aufweist. Die Düsentragteile 115, 117 sind schief bezüglich der Behandlungsrichtung 20 ausgerichtet, und das Düsentragteil 116 verläuft in Querrichtung. Die Front der Luftströme 86 ist dadurch ebenfalls trapezförmig und weist einen verhältnismäßig breiten Scheitelbereich 90 durch Überlagerung der Luftströme 86 auf.

Bei der Düsentrageinrichtung 119 gemäß Figur 26 sind vier Düsentragteile 120 bis 123 vorgesehen. In der Winkelstellung sind die Düsentragteile 120 bis 123 in einer Zick-Zack-Anordnung positioniert. Die Luftströme 86 bilden zwei Scheitelbereiche 90.

Die Düsentrageinrichtung 125 der Figur 27 weist Düsentragteile 126, 127 auf, die beispielsweise wie die Düsentragteile 62, 64 aufgebaut und zueinander bewegt sein können. Abweichend von der Trocknungsvorrichtung 10 sind die Düsen 80 derart an den Düsentragteilen 126, 127 positioniert, dass die Fronten der von ihnen bereitgestellten Luftströme 86 nicht zusammenfallen. Stattdessen sind die Düsen 80 so an den Düsentragteilen 126, 127 angebracht, dass die Ebenen der Luftströme 86 benachbarter Düsen 80 jeweils um einen gewissen, wenn auch vorliegend geringen, Winkel zueinander geneigt sind.

In der Winkelstellung der Düsentragteile 126, 127 ergibt sich dadurch eine bezüglich der Behandlungsrichtung 20 konkave Form der Luftströme 86 zu beiden Seiten des auch in diesem Fall vorhandenen Scheitelbereiches 90.

Eine ähnliche Lösung zeigt die Düsentrageinrichtung 129 gemäß Figur 28 mit Düsentragteilen 130, 131. Dabei sind die Düsen 80 so angeordnet, dass die Ebenen der Luftströme 86 benachbarter Düsen 80 geneigt sind, vorliegend ebenfalls um einen geringen Winkel.

Im Gegensatz zu der Variante gemäß Figur 27 sind die Düsen 80 so angeordnet, dass die Luftströme 86 zu beiden Seiten des weiterhin vorhandenen Scheitelbereiches 90 bezüglich der Behandlungsrichtung 20 eine konvexe Form bilden.

Es versteht sich, dass insbesondere die Anordnung der Düsen 80, wie sie bei den Düsentrageinrichtungen 125, 129 der Figuren 27 und 28 beschrieben wurde, bei der Trocknungsvorrichtung 10, der Trocknungsvorrichtung 92, der Trocknungsvorrichtung 110 oder einer der nachfolgend erläuterten Trocknungsvorrichtungen ebenfalls vorgesehen sein kann.

Bei den in den Figuren 13 bis 32 in schematischer Teildarstellung gezeigten Trocknungsvorrichtungen wird auf die Bezugszeichen zurückgegriffen, die bei der Trocknungsvorrichtung 10 verwendet wurden. Sofern anstelle der Halteteile 40, 42 nur ein Halteteil vorgesehen ist (Figuren 13 bis 16, 19, 20), wird hierfür ein identisches Bezugszeichen benutzt. Das Halteteil kann zum Beispiel durch den Querträger 32 oder durch ein an diesem gehaltenes Halteteil ausgestaltet werden.

Eine in Figur 13 gezeigte Trocknungsvorrichtung 133 zeigt die Düsentragteile 62, 64 in einer Geradstellung und ist ähnlich zur Trocknungsvorrichtung 10 aufgebaut. Es ist ein Halteteil 134 für beide Düsentragteile 62, 64 vorgesehen, das die Merkmale beider Halteteile 40, 42 aufweist.

Die Kopplungseinrichtung 74 umfasst statt des Gelenkes 76 an den Endseiten der Düsentragteile 62, 64, die dem jeweils anderen Düsentragteil 64, 62 zugewandt sind, Wälzkörper in Gestalt von Zahnradsegmenten 135. Über die abwälzende, kämmende Bewegung der Zahnradsegmente 135 wird die Bewegung eines Düsentragteils 62, 64 auf das jeweils andere Düsentragteil 64, 62 übertragen, wenn die Verstelleinrichtung 52 aktiviert wird.

Das Kolben-Zylinder-Aggregat 56 beaufschlagt das Düsentragteil 62 mit einer Stellkraft, und das Kolben-Zylinder-Aggregat 58 kann das Düsentragteil 64 mit einer Stellkraft beaufschlagen, wenn die Trocknungsvorrichtung 133 in der umgekehrten Behandlungsvorrichtung 20' verfahren wird.

Figur 14 zeigt eine Trocknungsvorrichtung 137, deren Düsentragteile 62, 64 eine Winkelstellung einnehmen. Die Trocknungsvorrichtung 137 ist der Trocknungsvorrichtung 133 ähnlich.

Abweichend von den Zahnradsegmenten 135 umfasst die Kopplungseinrichtung 74 ein Gelenkglied 138. Das Gelenkglied 138 ist an den Düsentragteilen 62, 64 endseitig dem jeweils anderen Düsentragteil 64, 62 zugewandt angelenkt. Das Gelenkglied 138 bildet eine Führung 139 für ein Führungselement 140, beispielsweise einen Führungszapfen. Das Führungselement 140 ist an einem Gelenk 141 gebildet, an dem zwei Gelenkglieder 142, 143 gelenkig miteinander verbunden sind, die ferner an den Düsentragteilen 62, 64 angelenkt sind.

Die Führungskulissen 48 beider Trocknungsvorrichtungen 133 und 137 sind im Wesentlichen C-förmig ausgestaltet und weisen in der Mitte jeweils einen Knick auf, um die Einnahme einer definierten Geradstellung durch die Düsentragteile 62, 64 zu ermöglichen.

Beide Trocknungsvorrichtungen 133, 137 ermöglichen den Einsatz beim Verfahren in der Behandlungsrichtung 20 und der umgekehrten Behandlungsrichtung 20', wobei zum Verschwenken der Düsentragteile 62, 64 jeweils nur ein Kolben-Zylinder-Aggregat 56 oder 58 erforderlich ist.

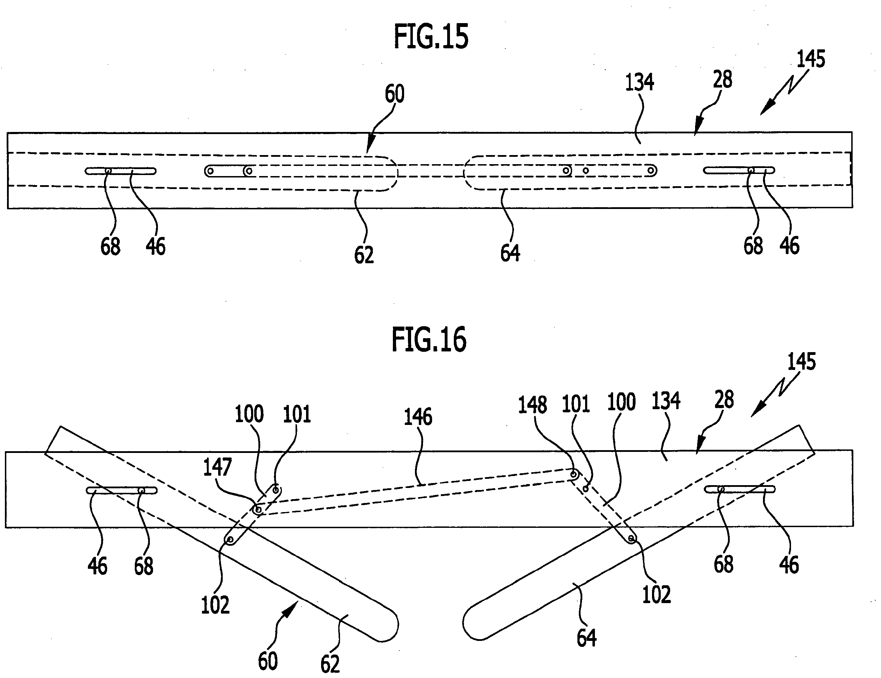

Die Figuren 15 und 16 zeigen eine mit dem Bezugszeichen 145 belegte Trocknungsvorrichtung, deren Düsentragteile 62, 64 die Geradstellung einnehmen (Figur 15) bzw. die Winkelstellung einnehmen (Figur 16).

Die Trocknungsvorrichtung 145 ähnelt vom Aufbau der Trocknungsvorrichtung 92. Die Zwangsführung 50 umfasst die Gelenkglieder 100, wobei die Kopplungseinrichtung 74 ein Gelenkglied 146 umfasst, das an beiden Gelenkgliedern 100 angelenkt ist. Ein Gelenk 147 dient zum Anlenken des Gelenkgliedes 146 zwischen den Gelenken 101 und 102 an einem Gelenkglied 100. Am jeweils anderen Gelenkglied 100 ist ein Gelenk 148 zur Anlenkung des Gelenkgliedes 146 vorgesehen, das außerhalb der gedachten Verbindung der Gelenke 101, 102 miteinander angeordnet ist. Das entsprechende Gelenkglied 100 steht daher über das Gelenk 101 hinaus.

Die Trocknungsvorrichtung 145 zeichnet sich durch eine besonders schmale Bauart auf, wobei der Abstand der Düsen 80 voneinander zum Beibehalten des Scheitelbereiches 90 in unterschiedlichen Winkelstellungen konstant gehalten werden kann.

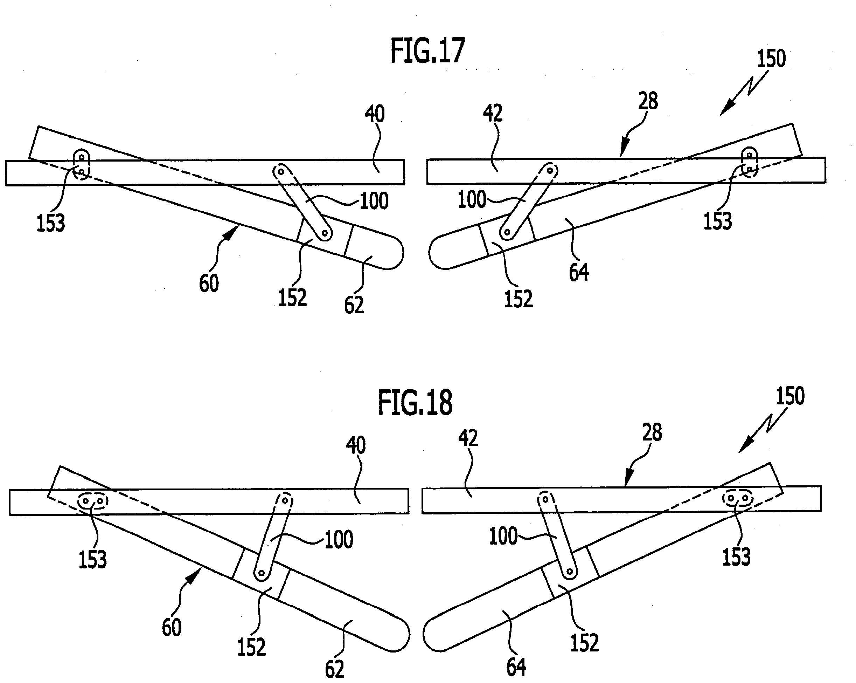

Eine in den Figuren 17 und 18 gezeigte Trocknungsvorrichtung 150 weist ebenfalls eine Zwangsführung 50 mit Gelenkgliedern 100 auf. An den Düsentragteilen 62, 64 sind allerdings keine räumlich unveränderlichen Gelenke 102 gebildet. Stattdessen sind Verschiebeelemente 152 vorgesehen, die zusammen mit den Gelenkgliedern 100 das jeweilige Gelenk 102 definieren und in Längsrichtung der Düsentragteile 62, 64 verschiebbar sind.

Anstelle der Lagerelemente 44, 66 und der damit verbundenen Führung 46 kommen bei der Trocknungsvorrichtung 150 Gelenkglieder 153 zum Einsatz, die an den Halteteilen 40, 42 und den Düsentragteilen 62 bzw. 64 andererseits angelenkt sind. Die Gelenkglieder 153 sind in Querrichtung von den Gelenkgliedern 100 beabstandet und kürzer als diese ausgestaltet, wobei sie in Querrichtung weiter in Richtung der Außenseite der Trocknungsvorrichtung 150 positioniert sind.

Die Halteteile 40, 42, die Düsentragteile 62, 64 und die Gelenkglieder 100 sowie 153 bilden dadurch Viergelenke (Gelenkpolygone) unterschiedlicher Form, zur Formveränderung tragen außer der Schwenkbewegung der Gelenkglieder 100, 153 noch die Verschiebungen der Verschiebeelemente 152 bei.

Die Trocknungsvorrichtung 150 zeichnet sich durch eine kompakte Bauform aus und eine Schwenkbewegung in beide Richtungen, damit die Trocknungsvorrichtung 150 in beiden Behandlungsrichtungen 20, 20' eingesetzt werden kann. Ein Stellorgan der Verstelleinrichtung 52 kann vielseitig positioniert werden. Die Verschwenkung der Düsentragteile 62, 64 kann annähernd parallel durchgeführt werden.

Die Figuren 17 und 18 zeigen die Düsentragteile 62, 64 in unterschiedlichen Winkelstellungen, wobei der Winkel 88 bei der Winkelstellung gemäß Figur 18 kleiner ist als bei der Winkelstellung gemäß Figur 17.

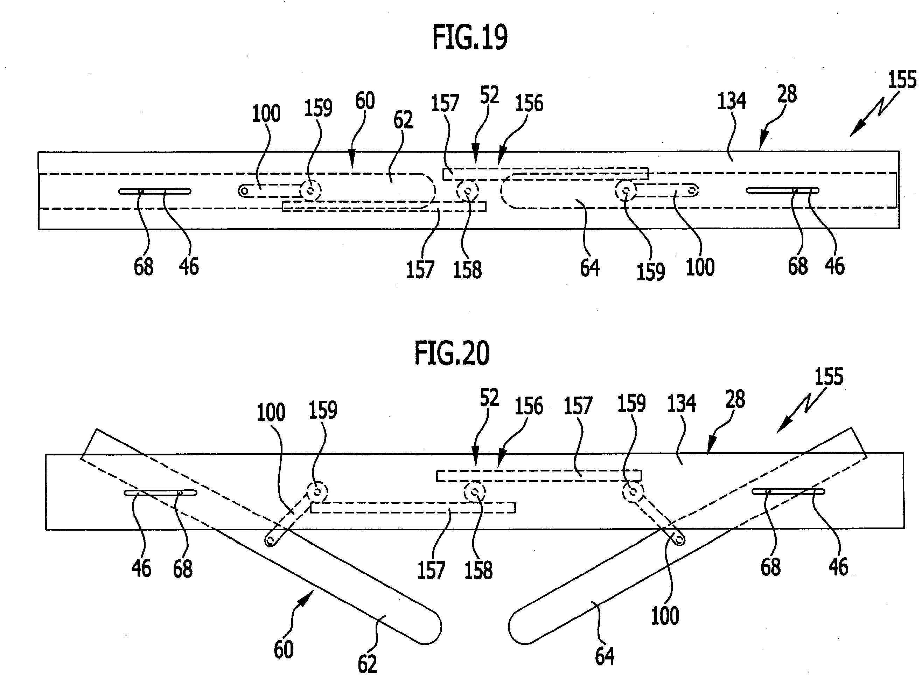

Die Figuren 19 und 20 zeigen eine mit dem Bezugszeichen 155 belegte Trocknungsvorrichtung, deren Düsentragteile 62, 64 in Figur 19 eine Geradstellung einnehmen, wohingegen in Figur 20 eine Winkelstellung der Düsentragteile 62, 64 gezeigt ist.

Die Trocknungsvorrichtung 15 weist einen ähnlichen Aufbau auf wie die Trocknungsvorrichtung 92.

Im Gegensatz zu dieser sind keine Kolben-Zylinder-Aggregate 56, 58 vorgesehen, stattdessen kommt ein als Zahnstangentrieb 156 ausgestalteter Wälzantrieb zum Einsatz, der zwei an dem Halteteil 134 in Querrichtung verschieblich gelagerte Antriebsbahnen in Gestalt von Zahnstangen 157 umfasst. Jedem Düsentragteil 62 ist eine Zahnstange 157 zugeordnet.

Ein als Zahnrad ausgestaltetes Antriebsrad 158 der Verstelleinrichtung 52 treibt an und verschiebt beide Zahnstangen 157.

Weiter sind zwei Wälzkörper in Gestalt von Zahnrädern 159 vorgesehen, wobei jedes davon am Gelenk 101 drehfest mit dem Gelenkglied 100 verbunden ist. Bei einer Verschiebung der Zahnstange 157 wird dadurch das Gelenkglied 100 zum Verschwenken des jeweiligen Düsentragteils 62, 64 verschwenkt.

Die Trocknungsvorrichtung 155 erlaubt eine Schwenkbewegung der Düsentragteile 62, 64 in beide Richtungen und einen Einsatz der Trocknungsvorrichtung 155 in beiden Behandlungsrichtungen 20, 20'. Eine kompakte Bauform ist möglich, und es ist nur eine Verstelleinrichtung 52 zum Verschwenken der Düsentragteile 62, 64 in beide Richtungen erforderlich.

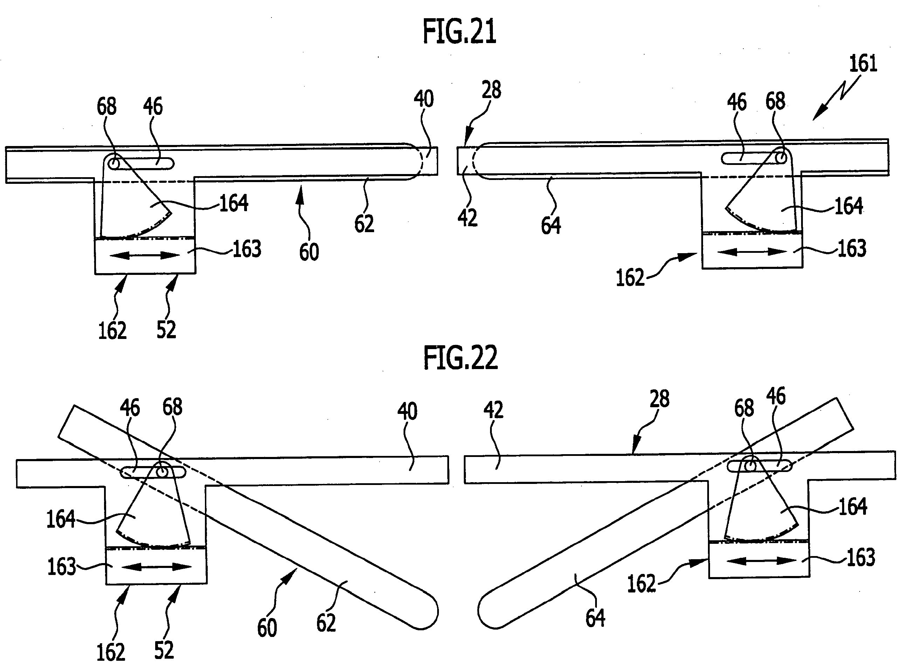

Die Figuren 21 und 22 zeigen eine mit dem Bezugszeichen 161 belegte Trocknungsvorrichtung, deren Düsentragteile 62, 64 in Figur 21 bei Einnahme der Geradstellung und in Figur 22 bei Einnahme einer Winkelstellung gezeigt sind.

Bei der Trocknungsvorrichtung 161 kommen Merkmale der Trocknungsvorrichtungen 10 und 92 zum Einsatz. Die Zwangsführung 50 entfällt, und anstelle der Kolben-Zylinder-Aggregate 56, 58 weist die Verstelleinrichtung 52 Wälzantriebe in Gestalt von Zahnstangentrieben 162 auf, deren jeweils einer einem Halteteil 40, 42 und einem Düsentragteil 62, 64 zugeordnet ist.

Der Zahnstangentrieb 162 umfasst eine am Halteteil 40 oder 42 verschiebbare Antriebsbahn in Gestalt einer Zahnstange 163 sowie einen Wälzkörper in Gestalt eines Zahnradsegmentes 164, das drehfest mit dem Düsentragteil 62 bzw. 64 verbunden ist. Beispielsweise erfolgt die Verbindung über den Lagerzapfen 68. Die Zahnstangen 163 können über ein jeweiliges weiteres Antriebselement der Verstelleinrichtung 53, das in der Zeichnung nicht dargestellt ist, zum Verschwenken der Düsentragteile 62, 64 an den Halteteilen 40, 42 verschoben werden.

Die Trocknungsvorrichtung 161 weist eine konstruktiv einfache und robuste Bauweise auf.

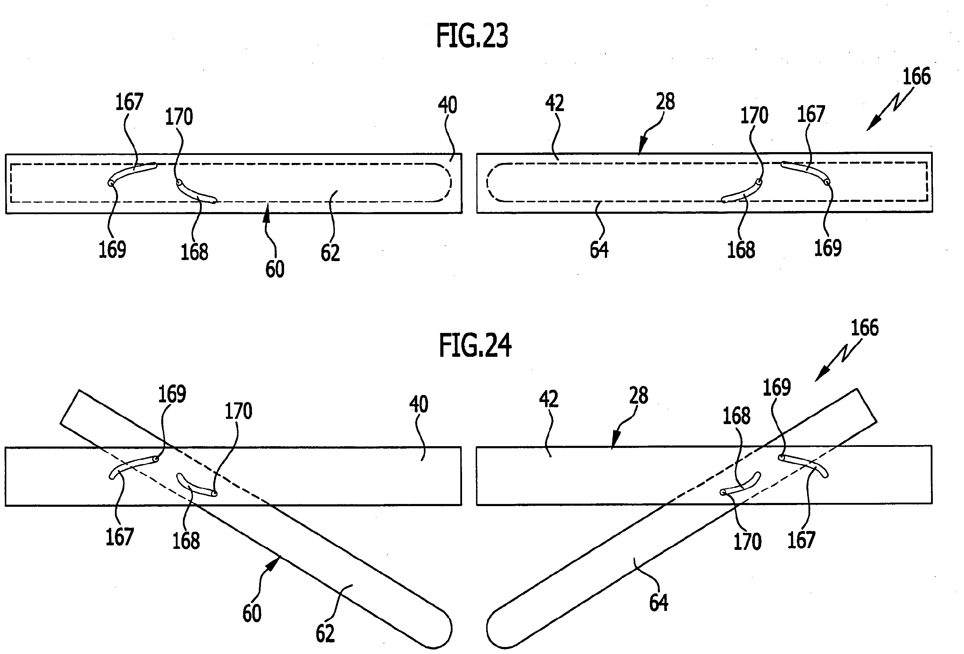

Auch eine in den Figuren 23 und 24 dargestellte und dort mit dem Bezugszeichen 166 belegte Trocknungsvorrichtung weist eine besonders einfache und robuste Konstruktion auf.

Bei der Trocknungsvorrichtung 166 sind an jedem Halteteil zwei unterschiedlich gekrümmte und im Abstand zueinander angeordnete Führungen 167, 168 vorgesehen. Die Führungen 167, 168 sind als Führungskulissen ausgestaltet.

An den Düsentragteilen 62, 64 sind jeweilige, in die Führungen 167, 168 eingreifende Führungselemente 169 bzw. 170 angeordnet. Anstelle einer Schwenk- und Verschiebebewegung, wie beispielsweise bei der Trocknungsvorrichtung 10, können die Düsentragteile 62, 64 sich überlagernde Schwenkbewegungen relativ zu den Halteteilen 40 bzw. 42 mit positionsveränderlichen Schwenklagern ausführen.

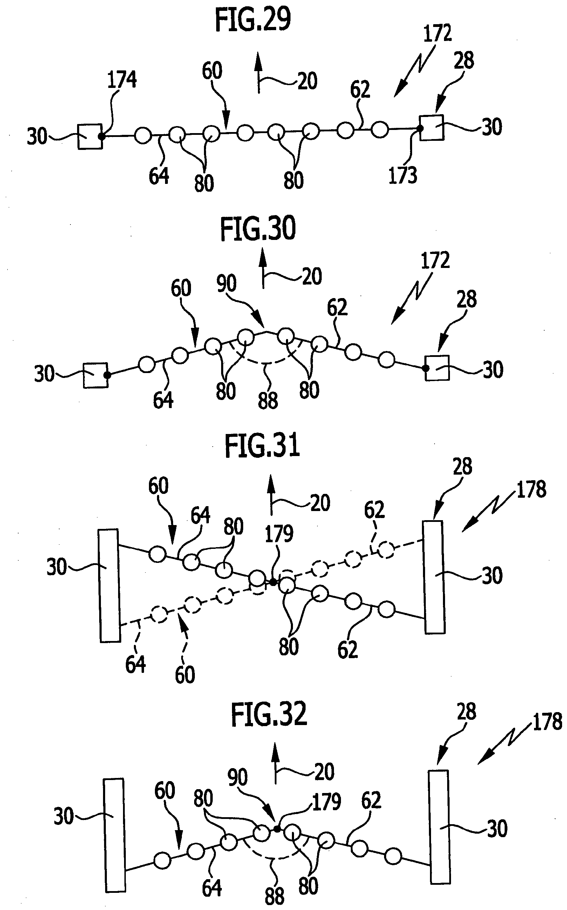

Die Figuren 29 und 30 zeigen eine mit dem Bezugszeichen 172 belegte vorteilhafte Ausführungsform einer erfindungsgemäßen Trocknungsvorrichtung. Für gleiche oder gleichwirkende Merkmale und Bauteile der Trocknungsvorrichtung 172 und der Trocknungsvorrichtung 10 werden identische Bezugszeichen benutzt.

Bei der Trocknungsvorrichtung 172 entfällt der Querträger 32 der Halteeinrichtung 28. Die Düsentragteile 62, 64 sind über Gelenke 173 bzw. 174 schwenkbar mit den Vertikalträgern 30 der Halteeinrichtung 28 verbunden. Die Düsentragteile 62 können durch Kanäle 84 gebildet sein, die in der Zeichnung nicht dargestellt sind. Bei der in der Zeichnung dargestellten Ausführungsform sind die Düsen 80 an den Düsentragteilen 62, 64 gesondert gehalten. Denkbar ist auch, dass ein die Düsen 80 austrittsseitig haltender Kanal 84 an einem jeweiligen Düsentragteil 62, 64 gehalten ist. Diese Aussagen gelten auch für die nachfolgend noch erläuterte Trocknungsvorrichtung 178.

In einer Geradstellung der Düsentragteile 62, 64 fluchten diese quer zur Behandlungsrichtung 20 miteinander (Figur 29). Die von den in der Zeichnung nicht dargestellten Luftströmen 86 gebildete Front der Trocknungsluft ist eben.

Die Düsentragteile 62, 64 können durch Verschwenken an den Vertikalträgern 30 in eine keilförmige Winkelstellung überführt werden (Figur 30). In der Winkelstellung der Düsentragteile 62, 64 ist ein Scheitelbereich 90 in Behandlungsrichtung 20 führend gebildet.

Es kann vorgesehen sein, dass abweichend von der Darstellung in Figur 30 über die Verschwenkung der Düsentragteile 62, 64 an den Vertikalträgern 30 hinaus auch eine Verschiebung relativ zur Halteeinrichtung 28 erfolgt, insbesondere in Querrichtung. Dadurch kann beispielsweise wie bei der Trocknungsvorrichtung 10 verhindert werden, dass der Abstand endseitig an den Düsentragteilen 62, 64 angeordneter Düsen 80 in Folge der Schwenkbewegung vergrößert wird.

Eine in den Figuren 31 und 32 gezeigte vorteilhafte Ausführungsform einer erfindungsgemäßen Trocknungsvorrichtung ist mit dem Bezugszeichen 178 belegt. Es werden dieselben Bezugszeichen wie bei der Trocknungsvorrichtung 10 verwendet.

Auch bei der Trocknungsvorrichtung 178 entfällt der Querträger 32. Die Düsentragteile 62, 64 sind beweglich an den Vertikalträgern 30 gehalten, insbesondere verschieblich, beispielsweise parallel zur Behandlungsrichtung 20. Ein Gelenk 179 verbindet die Düsentragteile 62, 64 schwenkbar miteinander an deren jeweiligen den Vertikalträgern 30 abgewandten Enden.

Die Düsentragteile 62, 64 können eine Geradstellung einnehmen, in der sie miteinander fluchten. Anders als beispielsweise bei der Trocknungsvorrichtung 172 fluchten die Düsentragteile 62, 64 nicht in Querrichtung miteinander, sondern schräg zur Behandlungsrichtung 20 und schräg zur Querrichtung. Dabei kann vorgesehen sein, dass das Düsentragteil 64 in der Behandlungsrichtung 20 führend an der Trocknungsvorrichtung 178 angeordnet ist. Dies entspricht der durchgezogenen Darstellung der Düsentrageinrichtung 60 in Figur 31. Denkbar ist alternativ auch, dass das Düsentragteil 62 in der Behandlungsrichtung 20 führend an der Trocknungsvorrichtung 178 angeordnet ist. Dies entspricht der gestrichelt dargestellten Anordnung der Düsentrageinrichtung 60 in Figur 31.

Durch die Ausrichtung der Düsentrageinrichtung 60 schief zur Behandlungsrichtung 20 ist es möglich, dass die Trocknungsvorrichtung 178 in Folge ihrer diagonalen Erstreckung über das Fahrzeug hinweg Reinigungsflüssigkeit schräg über die Fahrzeugoberfläche von einer Seite zur anderen Seite abbläst.

Die Düsentragteile 62, 64 können in eine Winkelstellung überführt werden (Figur 32). Dies kann vorteilhafterweise dadurch erfolgen, dass nur eines der Düsentragteile 62, 64 am Vertikalträger 30 verschoben wird unter gleichzeitiger Verschwenkung zum jeweils anderen Düsentragteil 62, 64 am Gelenk 179. Figur 32 stellt dies beispielhaft für eine Verschiebung und Verschwenkung des Düsentragteils 64 dar. Zur Erzielung eines Längenausgleiches zwischen der Geradstellung und der Winkelstellung können die Düsentragteile 62, 64 an den Querträgern 30 in Querrichtung verschieblich oder mit Spiel gehaltert sein.

In der keilförmigen Winkelstellung bilden auch die von den Düsen 80 der Trocknungsvorrichtung 178 bereitgestellten Luftströme 86 (in der Zeichnung nicht gezeigt) den Scheitelbereich 90 in der Behandlungsrichtung 20 führend.

Bei den Trocknungsvorrichtungen 172 und 178 könnte auch der Querträger 32 vorgesehen sein, an dem die Düsentragteile beweglich gelagert sein können.

Die Figuren 1 bis 4 zeigen die erfindungsgemäße Fahrzeugwaschanlage 12, bei der die Trocknungsvorrichtung 10 zum Einsatz kommt. Selbstverständlich ist denkbar, dass eine der anderen vorstehend beschriebenen Trocknungsvorrichtungen 92, 110, 133, 137, 145, 155, 161, 166, 172 oder 178 bei einer erfindungsgemäßen Fahrzeugwaschanlage 12 zum Einsatz kommt.

## Patentansprüche

1. Trocknungsvorrichtung für Kraftfahrzeuge zur Verwendung in einer Fahrzeugwaschanlage (12), welche Trocknungsvorrichtung (10; 92; 110; 133; 137; 145; 155; 161; 166; 172; 178) in einer Behandlungsrichtung (20) relativ zur Oberfläche eines zu trocknenden Kraftfahrzeuges (16) bewegbar ist, wobei die Trocknungsvorrichtung (10; 92; 110; 133; 137; 145; 155; 161; 166; 172; 178) eine Mehrzahl von mit Trocknungsluft beaufschlagbaren Düsen (80) und eine Düsentrageinrichtung (60) für die Düsen (80) sowie eine die Düsentrageinrichtung (60) haltende Halteeinrichtung (28) umfasst, **dadurch gekennzeichnet, dass** die Düsentrageinrichtung (60) quer zur Behandlungsrichtung nebeneinander angeordnet mindestens zwei Düsentragteile (62, 64) aufweist und an jedem Düsentragteil (62, 64) mindestens eine Düse (80) direkt oder indirekt gehalten ist und dass die Trocknungsvorrichtung (10; 92; 110; 133; 137; 145; 155; 161; 166; 172; 178) eine Verstelleinrichtung (52) umfasst zum Bewegen der mindestens zwei Düsentragteile (62, 64) an der Halteeinrichtung (28) und Überführen der Düsentragteile (62, 64) relativ zueinander zwischen mindestens zwei Relativstellungen, in denen die Düsentragteile (62, 64) mit unterschiedlichen Winkeln (88) zueinander ausgerichtet sind, wobei die zwei oder mehr Relativstellungen mindestens eine Winkelstellung umfassen, in der aus den Düsen (80) austretende Luftströme (86) in der Behandlungsrichtung (20) führend einen Scheitelbereich (90) aufweisen oder bilden.

2. Trocknungsvorrichtung nach Anspruch 1, **dadurch gekennzeichnet, dass** zumindest eines der Folgenden gilt:
- die Trocknungsvorrichtung (10; 92; 110; 133; 137; 145; 155; 161; 166; 172; 178) ist eine Dachtrocknungsvorrichtung;
- die zwei oder mehr Relativstellungen umfassen eine Geradstellung der Düsentragteile (62, 64), in welcher diese miteinander fluchten und die Düsentrageinrichtung (60) geradlinig oder im Wesentlichen geradlinig ausgestaltet ist;
- die zwei oder mehr Relativstellungen umfassen eine Mehrzahl von Winkelstellungen, in der die Düsentragteile (62, 64) in unterschiedlichen Winkeln zueinander ausgerichtet sind, wobei aus den Düsen austretende Luftströme in der Behandlungsrichtung (20) führend jeweils mindestens einen Scheitelbereich (90) aufweisen oder bilden;
- die Düsentragteile (62, 64) sind mittels der Verstelleinrichtung (52) kontinuierlich oder schrittweise zwischen den zwei oder mehr Relativstellungen überführbar, insbesondere zwischen zwei oder mehr Winkelstellungen;
- die Behandlungsrichtung (20) ist umkehrbar, wobei die Düsentragteile (62, 64) mittels der Verstelleinrichtung (52) relativ zueinander zwischen mindestens zwei Relativstellungen überführbar sind, in der die Düsentragteile (62, 64) mit unterschiedlichen Winkeln zueinander ausgerichtet sind, und wobei mindestens eine Winkelstellung vorgesehen ist, in der aus den Düsen (80) austretende Luftströme (86) in der umgekehrten Behandlungsrichtung (20) führend einen Scheitelbereich (90) aufweisen oder bilden.

3. Trocknungsvorrichtung nach einem der voranstehenden Ansprüche, **dadurch gekennzeichnet, dass** die Trocknungsvorrichtung (10; 92; 110; 133; 137; 145; 155; 161; 166; 172; 178) eine Detektionseinrichtung (22) zum Erfassen der Kontur des Kraftfahrzeuges (16) umfasst und eine mit der Detektionseinrichtung (22) und mit der Verstelleinrichtung (52) gekoppelte Steuereinrichtung (24), wobei die Düsentragteile (62, 64) abhängig von der erfassten Kontur die mindestens eine Winkelstellung einnehmen, vorzugsweise dass die Düsentragteile (62, 64) an einem Übergangsbereich, an dem Oberflächen des Kraftfahrzeuges (16) im Winkel aufeinanderstoßen, die Geradstellung zueinander einnehmen oder eine Winkelstellung einnehmen, in der sie in einem größeren Winkel (88) zueinander ausgerichtet sind als im Abstand zum Übergangsbereich.

4. Trocknungsvorrichtung nach einem der voranstehenden Ansprüche,
**dadurch gekennzeichnet, dass** eines der Folgenden gilt:
- die Düsentrageinrichtung (60) weist in der mindestens einen Winkelstellung der Düsentragteile (62, 64) eine in der Behandlungsrichtung (20) keilförmige Gestalt auf;
- die Düsentrageinrichtung (114) umfasst mehr als zwei Düsentragteile (115, 116, 117), die in der Winkelstellung derart zueinander ausgerichtet sind, dass die Düsentrageinrichtung (114) eine in der Behandlungsrichtung (20) konvexe oder trapezförmige Gestalt auf;
- die Düsentrageinrichtung (119) umfasst mehr als zwei Düsentragteile (120, 121, 122, 123), die in der mindestens einen Winkelstellung eine Zick-Zack-Anordnung zueinander einnehmen.

5. Trocknungsvorrichtung nach einem der voranstehenden Ansprüche,
**dadurch gekennzeichnet, dass** zumindest eines der Folgenden gilt:
- die Verstelleinrichtung (52) ist mechanisch, elektrisch, pneumatisch und/oder hydraulisch ausgestaltet;
- die Verstelleinrichtung (52) umfasst mindestens ein Kolben-Zylinder-Aggregat (56, 58; 94, 96), das an der Halteeinrichtung (28) und direkt oder indirekt an mindestens einem Düsentragteil (62, 64) angreift.

6. Trocknungsvorrichtung nach einem der voranstehenden Ansprüche,
**dadurch gekennzeichnet, dass** die Düsentragteile (62, 64) an der Halteeinrichtung (28) über die Verstelleinrichtung (28) schwenkbar und/oder verschieblich ausgestaltet sind, wobei korrespondierende Lagerelemente (44, 46) der Düsentragteile (62, 64) und der Halteeinrichtung (28) zusammenwirken.

7. Trocknungsvorrichtung nach Anspruch 6, **dadurch gekennzeichnet, dass** zumindest eines der Folgenden gilt:
- ein jeweiliges von den zusammenwirkenden Lagerelementen (44, 66) gebildetes Schwenklager (70) ist beim Überführen der Düsentragteile (62, 64) in die mindestens eine Winkelstellung positionsveränderlich, zum Verschieben der Düsentragteile (62, 64) relativ zueinander;
- die zusammenwirkenden Lagerelemente (44, 66) umfassen einen Lagerzapfen (68) und eine Führung (46) für diesen, wobei der Lagerzapfen (68) beim Verschwenken der Düsentragteile (62, 64) relativ zur Halteeinrichtung (28) in der Führung (46) verschoben wird, wobei der Lagerzapfen (68) insbesondere am Düsentragteil (62, 64) angeordnet ist und die Führung (46) an der Halteeinrichtung (28);
- eine jeweilige Zwangsführung (50) ist vorgesehen, die die Bewegung des Düsentragteils (62, 64) führt, wenn das Düsentragteil (62, 64) relativ zur Halteeinrichtung (28) verschwenkt und verschoben wird;
- die Trocknungsvorrichtung (10; 133; 137; 145) umfasst eine Kopplungseinrichtung (74) zum Koppeln der Düsentragteile (62, 64) miteinander, wobei eine Bewegung eines Düsentragteils (62, 64) relativ zur Halteeinrichtung (28) an das andere Düsentragteil (62, 64) übertragbar und dieses ebenfalls relativ zur Halteeinrichtung (28) bewegbar ist.

8. Trocknungsvorrichtung nach Anspruch 7, **dadurch gekennzeichnet, dass** zumindest eines der Folgenden gilt:
- die jeweilige Zwangsführung (50) umfasst eine Führungskulisse (48) und ein in diese eingreifendes Führungselement (72), wobei die Führungskulisse (48) insbesondere an der Halteeinrichtung (28) angeordnet ist und das Führungselement am Düsentragteil (62, 64) und/oder wobei die Führungskulisse (48) im Wesentlichen W- oder V-förmig ausgestaltet ist;
- die jeweilige Zwangsführung (50) umfasst ein Gelenkglied (100), das an der Halteeinrichtung (28) und am Düsentragteil (62, 64) angelenkt ist, wobei ein Stellorgan (54) der Verstelleinrichtung (52), insbesondere ein Kolben-Zylinder-Aggregat (94, 96), am Gelenkglied (100) und an der Halteeinrichtung (28) angreift und am Gelenkglied (100) vorzugsweise in einer einer Mehrzahl unterschiedlicher vordefinierter Positionen (108) festlegbar ist.

9. Trocknungsvorrichtung nach Anspruch 7 oder 8, **dadurch gekennzeichnet, dass** zumindest eines der Folgenden gilt:
- die Kopplungseinrichtung (74) umfasst ein die Düsentragteile (62, 64) miteinander verbindendes Gelenk (76), über das die Düsentragteile (62, 64) schwenkbar miteinander verbunden sind, wobei das Gelenk (76) vorzugsweise an jeweiligen einander zugewandten Endseiten der Düsentragteile (62, 64) angeordnet ist;
- die Kopplungseinrichtung (74) umfasst an den Düsentragteilen (62, 64) jeweils einen Wälzkörper (135), die beim Verschwenken der Düsentragteile (62, 64) in die mindestens eine Winkelstellung aufeinander abwälzen, wobei die Wälzkörper (135) vorzugsweise an jeweiligen einander zugewandten Endseiten der Düsentragteile (62, 64) angeordnet sind;
- die Kopplungseinrichtung (74) umfasst ein Gelenkglied (138), das an den Düsentragteilen (62, 64) angelenkt ist, vorzugsweise an jeweiligen einander zugewandten Endseiten der Düsentragteile (62, 64);
- die Kopplungseinrichtung umfasst ein Gelenkglied (146), das an den Gelenkgliedern (100) der jeweiligen Zwangsführung (50) angelenkt ist.

10. Trocknungsvorrichtung nach einem der voranstehenden Ansprüche, **dadurch gekennzeichnet, dass** die Verstelleinrichtung (52) einen jeweiligen Wälzantrieb (156; 162) für die Düsentragteile (62, 64) umfasst mit einer an der Halteeinrichtung (28) verschiebbaren Antriebsbahn (157; 163) und einem auf dieser abwälzenden und am Düsentragteil (62, 64) direkt oder indirekt festgelegten Wälzkörper (159, 164), wobei vorzugsweise zumindest eines der Folgenden gilt:
- der Wälzkörper (159, 164) ist drehfest mit einem jeweiligen Gelenkglied (100) der Zwangsführung (50) verbunden;
- die Verstelleinrichtung (52) umfasst ein gemeinsames Antriebsrad (158), mit dem beide den Düsentragteilen (62, 64) zugeordnete Antriebsbahnen (157) antreibbar sind.

11. Trocknungsvorrichtung nach einem der voranstehenden Ansprüche, **dadurch gekennzeichnet, dass** zumindest eines der Folgenden gilt:
- die Düsentragteile (62, 64) sind mit der Halteeinrichtung (28) jeweils über zwei Gelenkglieder (100, 153) unterschiedlicher Länge gelenkig verbunden, die im Abstand zueinander an der Halteeinrichtung (28) und an dem jeweiligen Düsentragteil (62, 64) angelenkt sind;
- die Düsentragteile (62, 64) sind jeweils schwenkbar mit der Halteeinrichtung (28) verbunden, wobei für jedes Düsentragteil (62, 64) zwei im Abstand zueinander angeordnete gekrümmte Führungsbahnen (167, 168) und in diese eingreifende Führungselemente (169, 170) vorgesehen sind;
- die Verstelleinrichtung (52) greift an nur einem der Düsentragteile (62, 64) an, um dieses relativ zur Halteeinrichtung (28) zu bewegen;
- die Halteeinrichtung (28) umfasst einem jeweiligen Düsentragteil (62, 64) zugeordnet ein Halteteil (40, 42), an dem das jeweilige Düsentragteil (62, 64) beweglich gelagert ist, sowie einen die Halteteile (40, 42) haltenden Träger (32);
- die Trocknungsvorrichtung (10; 92; 110; 133; 137; 145; 155; 161; 166) umfasst eine Hubeinrichtung (34) zum Anheben der Halteeinrichtung (28) mit daran gehaltener Düsentrageinrichtung (60) relativ zum Kraftfahrzeug (16) und/oder eine Kippeinrichtung (36) zum Kippen der Halteeinrichtung (28) mit daran gehaltener Düsentrageinrichtung (60) relativ zum Kraftfahrzeug;
- die Düsen (80) sind oder umfassen Flachstrahldüsen (80), die einen sich fächerförmig verbreiternden Luftstrom im Wesentlichen in einer Ebene bilden;
- die Düsen (80) sind oder umfassen Rundstrahldüsen, die einen zylindrischen, hohlzylindrischen, kegelförmigen, kegelstumpfförmigen oder hohlkegelförmigen Luftstrom bilden;
- die Düsen (80) sind oder umfassen Schlitzdüsen, wobei an jedem Düsentragteil genau eine Schlitzdüse vorgesehen sein kann;
- die Düsen (80) sind oder umfassen Düsen, die einen Luftstrom in einer gekrümmten Fläche ausbilden.

12. Trocknungsvorrichtung nach Anspruch 11, **dadurch gekennzeichnet, dass** die Trocknungsvorrichtung (10; 92; 110; 133; 137; 145; 155; 161; 166; 172; 178) eine Detektionseinrichtung (22) zum Erfassen der Kontur des Kraftfahrzeuges (16) umfasst und eine mit der Detektionseinrichtung (22) und der Hubeinrichtung (34) gekoppelte Steuereinrichtung (24), wobei die Trocknungsvorrichtung (10; 92; 110; 133; 137; 145; 155; 161; 166) in einen derartigen Abstand zur Oberfläche des Kraftfahrzeuges (16) bringbar ist, dass Luftströme (86) der Düsen (80) einander oberhalb der Oberfläche überlagern.

13. Trocknungsvorrichtung nach einem der voranstehenden Ansprüche, **dadurch gekennzeichnet, dass** an den Düsentragteilen (62, 64) jeweils eine Mehrzahl von Düsen (80) gehalten ist, die insbesondere seitlich nebeneinander an dem Düsentragteil (62, 64) angeordnet sind.

14. Trocknungsvorrichtung nach Anspruch 13, **dadurch gekennzeichnet, dass** zumindest eines der Folgenden gilt:
- die Düsen (80) sind so an den Düsentragteilen (62, 64) angeordnet, dass in deren mindestens einer Winkelstellung die Luftströme (86) eine konvexe oder konkave Form in der Behandlungsrichtung (20) ausbilden;
- die Mehrzahl der Düsen (80) sind Flachstrahldüsen (80) und/oder Rundstrahldüsen;
- die mehreren Düsen (80) sind getrennt voneinander am Düsentragteil (62, 64) gehalten und von einer Gebläseeinrichtung (78) der Trocknungsvorrichtung (10; 92; 110; 133; 137; 145; 155; 161; 166; 172; 178) über jeweilige Kanäle mit Trocknungsluft beaufschlagbar sind;
- an einem jeweiligen Düsentragteil (62, 64) ist ein Kanal (84) für Trocknungsluft gehalten oder das jeweilige Düsentragteil (62, 64) umfasst einen solchen Kanal (84) oder ist durch einen Kanal gebildet, der austrittsseitig die Mehrzahl von Düsen (80) aufweist und der eintrittsseitig von einer Gebläseeinrichtung (78) mit Trocknungsluft beaufschlagbar ist.

15. Trocknungsvorrichtung nach einem der voranstehenden Ansprüche, **dadurch gekennzeichnet, dass** die Trocknungsvorrichtung (10; 92; 110; 133; 137; 145; 155; 161; 166; 172; 178) eine Gebläseeinrichtung (78) umfasst mit mindestens einem die Düsentrocknungsluft beaufschlagenden Gebläse (82).

16. Trocknungsvorrichtung nach Anspruch 15, **dadurch gekennzeichnet, dass** zumindest eines der Folgenden gilt:
- die Gebläseeinrichtung (78) umfasst ein Gebläse (82), das zwei oder mehr Düsen (80) zugeordnet ist, oder jeder Düse (80) ist ein separates Gebläse (82) der Gebläseeinrichtung (78) zugeordnet;
- die Gebläseeinrichtung (78) ist an der Halteeinrichtung (28) gehalten und ist vorzugsweise mit dieser höhenverstellbar und/oder um eine Achse (38) quer zur Behandlungsrichtung (20) kippbar.

17. Trocknungsvorrichtung nach einem der voranstehenden Ansprüche, **dadurch gekennzeichnet, dass** zumindest eines der Folgenden gilt:
- an jedem Düsentragteil (62, 64) ist eine in dessen Längsrichtung erstreckte Schlitzdüse angeordnet;
- die Düsentragteile (62, 64) und die daran gehaltenen Düsen (80) sind symmetrisch zueinander ausgestaltet und an der Trocknungsvorrichtung (10; 92; 110; 133; 137; 145; 155; 161; 166; 172; 178) angeordnet;
- an zumindest einem Düsentragteil (62, 64) ist dem benachbarten Düsentragteil (62, 64) zugewandt eine Rundstrahldüse angeordnet, so dass in der Winkelstellung der Düsentragteile am Scheitelbereich (90) zumindest ein Luftstrom mittels der Rundstrahldüse erzeugbar ist;
- Düsen (80) sind an einem jeweiligen Düsentragteil (62, 64) positionsveränderlich gehalten;
- benachbarte Düsentragteile (62, 64) sind an einem Gelenk (76; 179) schwenkbar und/oder verschiebbar miteinander verbunden.

18. Fahrzeugwaschanlage, umfassend mindestens eine Trocknungsvorrichtung (10; 92; 110; 133; 137; 145; 155; 161; 166; 172; 178) nach einem der voranstehenden Ansprüche.

## Claims

1. Drying apparatus for motor vehicles for use in a vehicle wash installation (12), which drying apparatus (10; 92; 110; 133; 137; 145; 155; 161; 166; 172; 178) is movable in a treatment direction (20) relative to the surface of a motor vehicle (16) to be dried, wherein the drying apparatus (10; 92; 110; 133; 137; 145; 155; 161; 166; 172; 178) comprises a plurality of nozzles (80) which are suppliable with drying air and comprises a nozzle support device (60) for the nozzles (80) and a holding device (28) which holds the nozzle support device (60), **characterized in that** the nozzle support device (60) comprises at least two nozzle supporting parts (62, 64) arranged side by side transversely to the treatment direction and at least one nozzle (80) is held directly or indirectly on each nozzle supporting part (62, 64), and **in that** the drying apparatus (10; 92; 110; 133; 137; 145; 155; 161; 166; 172; 178) comprises an adjusting device (52) for moving the at least two nozzle supporting parts (62, 64) on the holding device (28) and transferring the nozzle supporting parts (62, 64) relative to one another between at least two relative positions in which the nozzle supporting parts (62, 64) are oriented at different angles (88) to one another, wherein the two or more relative positions comprise at least one angular position in which air flows (86) exiting the nozzles (80) have or form an apex region (90) on the side that is leading with respect to the treatment direction (20).

2. Drying apparatus in accordance with claim 1, **characterized in that** at least one of the following applies:
- the drying apparatus (10; 92; 110; 133; 137; 145; 155; 161; 166; 172; 178) is a roof drying apparatus;
- the two or more relative positions comprise a straight position of the nozzle supporting parts (62, 64) in which the nozzle supporting parts (62, 64) line up with each other and the nozzle support device (60) is of a straight-line or substantially straight-line configuration;
- the two or more relative positions comprise a plurality of angular positions in which the nozzle supporting parts (62, 64) are oriented at different angles to one another, wherein air flows exiting the nozzles have or form in each case at least one apex region (90) on the side that is leading with respect to the treatment direction (20);
- the nozzle supporting parts (62, 64) are transferable continuously or in steps between the two or more relative positions, in particular between two or more angular positions, by way of the adjusting device (52);
- the treatment direction (20) is reversible, wherein by way of the adjusting device (52), the nozzle supporting parts (62, 64) are transferable relative to one another between at least two relative positions in which the nozzle supporting parts (62, 64) are oriented at different angles to one another, and wherein at least one angular position is provided in which air flows (86) exiting the nozzles (80) have or form an apex region (90) on the side that is leading with respect to the reverse treatment direction (20').

3. Drying apparatus in accordance with any one of the preceding claims, **characterized in that** the drying apparatus (10; 92; 110; 133; 137; 145; 155; 161; 166; 172; 178) comprises a detection device (22) for detecting the contour of the motor vehicle (16) and a control device (24) coupled to the detection device (22) and to the adjusting device (52), wherein the nozzle supporting parts (62, 64) assume the at least one angular position depending on the detected contour, preferably that in a transition area at which surfaces of the motor vehicle (16) meet at an angle, the nozzle supporting parts (62, 64) assume the straight position relative to each other or assume an angular position in which they are oriented to each other at a greater angle (88) than when at a distance from the transition area.

4. Drying apparatus in accordance with any one of the preceding claims, **characterized in that** at least one of the following applies:
- in the at least one angular position of the nozzle supporting parts (62, 64), the nozzle support device (60) has a wedge-like shape in the treatment direction (20);
- the nozzle support device (114) comprises more than two nozzle supporting parts (115, 116, 117) which in the angular position are oriented with respect to each other in such a way that the nozzle support device (114) has a convex or trapezoidal shape in the treatment direction (20);
- the nozzle support device (119) comprises more than two nozzle supporting parts (120, 121, 122, 123) which in the at least one angular position assume a zigzag arrangement with respect to each other.

5. Drying apparatus in accordance with any one of the preceding claims, **characterized in that** at least one of the following applies:
- the adjusting device (52) has a mechanical, electrical, pneumatic and/or hydraulic configuration;
- the adjusting device (52) comprises at least one piston-cylinder unit (56, 58; 94, 96) which engages the holding device (28) and, directly or indirectly, at least one nozzle supporting part (62, 64).

6. Drying apparatus in accordance with any one of the preceding claims, **characterized in that** the nozzle supporting parts (62, 64) are configured for pivotal and/or displacement movement on the holding device (28) via the adjusting device (28), wherein corresponding bearing elements (44, 46) of the nozzle supporting parts (62, 64) and of the holding device (28) cooperate.

7. Drying apparatus in accordance with claim 14, **characterized in that** at least one of the following applies:
- a respective pivot bearing (70) formed by the cooperating bearing elements (44, 66) is variably positionable for displacing the nozzle supporting parts (62, 64) relative to one another when the nozzle supporting parts (62, 64) are transferred to the at least one angular position;
- the cooperating bearing elements (44, 66) comprise a bearing pin (68) and a guide (46) therefor, wherein the bearing pin (68) is displaced in the guide (46) when the nozzle supporting parts (62, 64) are pivoted relative to the holding device (28), wherein in particular the bearing pin (68) is arranged on the nozzle supporting part (62, 64) and the guide (46) is arranged on the holding device (28);
- a respective constrained guide (50) is provided which guides the movement of the nozzle supporting part (62, 64) when the nozzle supporting part (62, 64) is pivoted and displaced relative to the holding device (28);
- the drying apparatus (10; 133; 137; 145) comprises a coupling device (74) for coupling the nozzle supporting parts (62, 64) to each other, wherein a movement of one nozzle supporting part (62, 64) relative to the holding device (28) is transferable to the other nozzle supporting part (62, 64) and the latter is also movable relative to the holding device (28).

8. Drying apparatus in accordance with claim 7, **characterized in that** at least one of the following applies:
- the respective constrained guide (50) comprises a guide track (48) and a guide element (72) engaging therein, wherein in particular the guide track (48) is arranged on the holding device (28) and the guide element is arranged on the nozzle supporting part (62, 64) and/or wherein the guide track (48) is configured in a substantially W or V shape;
- the respective constrained guide (50) comprises a joint member (100) which is articulated to the holding device (28) and to the nozzle supporting part (62, 64), wherein an actuator (54) of the adjusting device (52), in particular a piston-cylinder unit (94, 96), engages the joint member (100) and the holding device (28) and is preferably fixable to the joint member (100) in one of a plurality of different predefined positions (108).

9. Drying apparatus in accordance with claim 7 or 8, **characterized in that** at least one of the following applies:
- the coupling device (74) comprises a joint (76) connecting the nozzle supporting parts (62, 64) with each other, via which joint (76) the nozzle supporting parts (62, 64) are pivotably connected with each other, preferably wherein the joint (76) is arranged on respective end sides of the nozzle supporting parts (62, 64) facing towards one another;
- the coupling device (74) comprises a rolling body (135) on each of the nozzle supporting parts (62, 64), which rolling bodies (135) roll on one another when the nozzle supporting parts (62, 64) are pivoted to the at least one angular position, preferably wherein the rolling bodies (135) are arranged on respective end sides of the nozzle supporting parts (62, 64) facing towards one another;
- the coupling device (74) comprises a joint member (138) which is articulated to the nozzle supporting parts (62, 64), preferably on respective end sides of the nozzle supporting parts (62, 64) facing towards one another;
- coupling device comprises a joint member (146) which is articulated to the joint members (100) of the respective constrained guide (50).

10. Drying apparatus in accordance with any one of the preceding claims, **characterized in that** the adjusting device (52) comprises a respective rolling drive (156; 162) for the nozzle supporting parts (62, 64) having a driving track (157; 163) displaceable on the holding device (28) and a rolling body (159, 164) rolling on the driving track (157; 163) and fixed directly or indirectly to the nozzle supporting part (62, 64), wherein at least one of the following applies:
- the rolling body (159, 164) is connected to a respective joint member (100) of the constrained guide (50) in rotationally fixed relation therewith;
- the adjusting device (52) comprises a common drive wheel (158) with which both driving tracks (157) associated with the nozzle supporting parts (62, 64) are drivable.

11. Drying apparatus in accordance with any one of the preceding claims, **characterized in that** at least one of the following applies:
- the nozzle supporting parts (62, 64) are each articulately connected to the holding device (28) via two joint members (100, 153) of different lengths which are articulated to the holding device (28) and to the respective nozzle supporting part (62, 64) in spaced relation to each other;
- the nozzle supporting parts (62, 64) are each pivotably connected to the holding device (28), wherein two curved guide tracks (167, 168) arranged in spaced relation to one another and guide elements (169, 170) engaging therein are provided for each nozzle supporting part (62, 64);
- the adjusting device (52) engages only one of the nozzle supporting parts (62, 64) in order to move these relative to the holding device;
- the holding device (28) comprises, associated with a respective nozzle supporting part (62, 64), a holding part (40, 42) on which the respective nozzle supporting part (62, 64) is movably supported as well as a carrier (32) holding the holding parts (40, 42);
- the drying apparatus (10; 92; 110; 133; 137; 145; 155; 161; 166) comprises a lifting device (34) for lifting, relative to the motor vehicle (16), the holding device (28) having a nozzle support device (60) held thereon and/or a tilting device (36) for tilting, relative to the motor vehicle, the holding device (28) having a nozzle support device (60) held thereon;
- the nozzles (80) are or comprise flat jet nozzles (80) which form an air flow that spreads out in a fan shape in substantially one plane;
- the nozzles (80) are or comprise circular jet nozzles which form a cylindrical, hollow-cylindrical, cone shaped, truncated cone or hollow cone shaped air flow;
- the nozzles (80) are or comprise slotted nozzles, wherein exactly one slotted nozzle can be provided on each nozzle supporting part;
- the nozzles (80) are or comprise nozzles which form an air flow in a curved surface area.

12. Drying apparatus in accordance with claim 11, **characterized in that** the drying apparatus (10; 92; 110; 133; 137; 145; 155; 161; 166; 172; 178) comprises a detection device (22) for detecting the contour of the motor vehicle (16) and a control device (24) coupled to the detection device (22) and to the lifting device (34), wherein the drying apparatus (10; 92; 110; 133; 137; 145; 155; 161; 166) can be brought to a distance from the surface of the motor vehicle (16) at which air flows (86) of the nozzles (80) superimpose one another above the surface.

13. Drying apparatus in accordance with any one of the preceding claims, **characterized in that** a plurality of nozzles (80) are held on each of the nozzle supporting parts (62, 64), which nozzles (80) are in particular arranged side by side next to one another on the nozzle supporting part (62, 64).

14. Drying apparatus in accordance with claim 36, **characterized in that** at least one of the following applies:
- the nozzles (80) are arranged on the nozzle supporting parts (62, 64) such that in the at least one angular position thereof, the air flows (86) form a convex or concave shape in the treatment direction (20);
- the plurality of nozzles (80) are flat jet nozzles (80) and/or circular jet nozzles;
- the plurality of nozzles (80) are held separately from one another on the nozzle supporting part (62, 64) and are suppliable with drying air by a blower device (78) of the drying apparatus (10; 92; 110; 133; 137; 145; 155; 161; 166; 172; 178) via respective ducts.
- a duct (84) for drying air is held on a respective nozzle supporting part (62, 64) or **in that** the respective nozzle supporting part (62, 64) comprises such a duct (84) or is formed by a duct which has the plurality of nozzles (80) on the outlet side thereof and is suppliable with drying air at an inlet side thereof by a blower device (78).

15. Drying apparatus in accordance with any one of the preceding claims, **characterized in that** the drying apparatus (10; 92; 110; 133; 137; 145; 155; 161; 166; 172; 178) comprises a blower device (78) having at least one blower (82) which supplies the nozzles with drying air.

16. Drying apparatus in accordance with claim 15, **characterized in that** at least one of the following applies:
- the blower device (78) comprises a blower (82) which has two or more nozzles (80) associated therewith or each nozzle (80) has a separate blower (82) of the blower device (78) associated therewith;
- the blower device (78) is held to the holding device (28) and is preferably adjustable in height and/or tiltable about an axis (38) transverse to the treatment direction (20) together with the holding device (28).

17. Drying apparatus in accordance with any one of the preceding claims, **characterized in that** at least one of the following applies:
- each nozzle supporting part (62, 64) has arranged thereon a slotted nozzle extended in the longitudinal direction thereof;
- the nozzle supporting parts (62, 64) and the nozzles (80) held thereto are symmetrically configured relative to one another and arranged on the drying apparatus (10; 92; 110; 133; 137; 145; 155; 161; 166; 172; 178);
- a circular jet nozzle is arranged on at least one nozzle supporting part (62, 64) on a side thereof facing towards an adjacent nozzle supporting part (62, 64) so that in the angular position of the nozzle supporting parts at least one air flow from a circular jet nozzle can be provided in the apex region (90);
- nozzles (80) are held to a respective nozzle supporting part (62, 64) in a variably positionable manner;
- adjacent nozzle supporting parts (62, 64) are connected together for pivotal movement and/or displacement on a joint (76; 179).

18. Vehicle wash installation, comprising at least one drying apparatus (10; 92; 110; 133; 137; 145; 155; 161; 166; 172; 178) in accordance with any one of the preceding claims.

## Revendications

1. Dispositif de séchage pour véhicules à moteur destiné à être utilisé dans une installation de lavage de véhicule (12), lequel dispositif de séchage (10 ; 92 ; 110 ; 133 ; 137 ; 145 ; 155 ; 161 ; 166 ; 172 ; 178) est mobile dans une direction de traitement (20) par rapport à la surface d'un véhicule à moteur (16) à sécher, dans lequel le dispositif de séchage (10 ; 92 ; 110 ; 133 ; 137 ; 145 ; 155 ; 161 ; 166 ; 172 ; 178) comprend une pluralité de buses (80) pouvant être alimentées en air de séchage et un dispositif de support de buses (60) pour les buses (80) ainsi qu'un dispositif de maintien (28) maintenant le dispositif de support de buses (60), **caractérisé en ce que** le dispositif de support de buses (60) présente au moins deux parties de support de buses (62, 64) disposées l'une à côté de l'autre transversalement à la direction de traitement et au moins une buse (80) est maintenue directement ou indirectement sur chaque partie de support de buses (62, 64) et que le dispositif de séchage (10 ; 92 ; 110 ; 133 ; 137 ; 145 ; 155 ; 161 ; 166 ; 172 ; 178) comprend un dispositif de déplacement (52) pour faire se mouvoir les au moins deux parties de support de buses (62, 64) sur le dispositif de maintien (28) et amener les parties de support de buses (62, 64) l'une par rapport à l'autre entre au moins deux positions relatives, dans lesquelles les parties de support de buses (62, 64) sont orientées l'une par rapport à l'autre selon des angles (88) différents, dans lequel les deux positions relatives ou plus comprennent au moins une position angulaire, dans laquelle les flux d'air (86) sortant des buses (80), menant dans la direction de traitement (20), présentent ou forment une zone de crête (90).

2. Dispositif de séchage selon la revendication 1, **caractérisé en ce qu'**au moins un de ce qui suit s'applique :
- le dispositif de séchage (10 ; 92 ; 110 ; 133 ; 137 ; 145 ; 155 ; 161 ; 166 ; 172 ; 178) est un dispositif de séchage de toit ;
- les deux positions relatives ou plus comprennent une position droite des parties de support de buses (62, 64), dans laquelle celles-ci sont en alignement l'une avec l'autre et le dispositif de support de buses (60) est réalisé de manière rectiligne ou sensiblement rectiligne ;
- les deux positions relatives ou plus comprennent une pluralité de positions angulaires, dans lesquelles les parties de support de buses (62, 64) sont orientées l'une par rapport à l'autre selon différents angles, dans lequel les flux d'air sortant des buses, menant dans la direction de traitement (20), présentent ou forment respectivement au moins une zone de crête (90) ;
- les parties de support de buses (62, 64) peuvent être amenées au moyen du dispositif de déplacement (52) en continu ou progressivement entre les deux positions relatives ou plus, en particulier entre deux positions angulaires ou plus ;
- la direction de traitement (20) est réversible, dans lequel les parties de support de buses (62, 64) peuvent être amenées l'une par rapport à l'autre au moyen du dispositif de déplacement (52) entre au moins deux positions relatives, dans lesquelles les parties de support de buses (62, 64) sont orientées l'une par rapport à l'autre selon différents angles, et dans lequel au moins une position angulaire est prévue, dans laquelle les flux d'air (86) sortant des buses (80), menant dans la direction de traitement (20) inverse, présentent ou forment une zone de crête (90).

3. Dispositif de séchage selon l'une quelconque des revendications précédentes, **caractérisé en ce que** le dispositif de séchage (10 ; 92 ; 110 ; 133 ; 137 ; 145 ; 155 ; 161 ; 166 ; 172 ; 178) comprend un dispositif de détection (22) destiné à détecter le contour du véhicule à moteur (16) et un dispositif de commande (24) couplé au dispositif de détection (22) et au dispositif de déplacement (52), dans lequel les parties de support de buses (62, 64), en fonction du contour détecté, occupent l'au moins une position angulaire, de préférence que les parties de support de buses (62, 64), sur une zone de transition sur laquelle des surfaces du véhicule à moteur (16) se rencontrent de manière à former un angle, occupent la position droite l'une par rapport à l'autre ou occupent une position angulaire dans laquelle elles sont orientées l'une par rapport à l'autre selon un angle (88) plus grand qu'à distance de la zone de transition.

4. Dispositif de séchage selon l'une quelconque des revendications précédentes, **caractérisé en ce qu'**un de ce qui suit s'applique :
- le dispositif de support de buses (60) présente dans l'au moins une position angulaire des parties de support de buses (62, 64) une forme de coin dans la direction de traitement (20) ;
- le dispositif de support de buses (114) comprend plus de deux parties de support de buses (115, 116, 117), qui sont orientées les unes par rapport aux autres dans la position angulaire de telle sorte que le dispositif de support de buses (114) présente une forme convexe ou trapézoïdale dans la direction de traitement (20) ;
- le dispositif de support de buses (119) comprend plus de deux parties de support de buses (120, 121, 122, 123), qui occupent les unes par rapport aux autres une disposition en zigzag dans l'au moins une position angulaire.

5. Dispositif de séchage selon l'une quelconque des revendications précédentes, **caractérisé en ce qu'**au moins un de ce qui suit s'applique :
- le dispositif de déplacement (52) est réalisé de manière mécanique, électrique, pneumatique et/ou hydraulique ;
- le dispositif de déplacement (52) comprend au moins un ensemble piston-cylindre (56, 58 ; 94, 96), qui agit sur le dispositif de maintien (28) et directement ou indirectement sur au moins une partie de support de buses (62, 64).

6. Dispositif de séchage selon l'une quelconque des revendications précédentes, **caractérisé en ce que** les parties de support de buses (62, 64) sont réalisées de manière pivotante et/ou mobile sur le dispositif de maintien (28) par l'intermédiaire du dispositif de déplacement (28), dans lequel des éléments de palier (44, 46) correspondants des parties de support de buses (62, 64) et du dispositif de maintien (28) coopèrent.

7. Dispositif de séchage selon la revendication 6, **caractérisé en ce qu'**au moins un de ce qui suit s'applique :
- un palier pivotant (70) respectif formé par les éléments de palier (44, 66) en coopération est variable en position lors de l'amenée des parties de support de buses (62, 64) dans l'au moins une position angulaire, pour le déplacement des parties de support de buses (62, 64) l'une par rapport à l'autre ;
- les éléments de palier (44, 66) en coopération comprennent un tourillon de montage (68) et un guidage (46) pour celui-ci, dans lequel le tourillon de montage (68), lors du pivotement des parties de support de buses (62, 64) par rapport au dispositif de maintien (28), est déplacé dans le guidage (46), dans lequel le tourillon de montage (68) est disposé en particulier sur la partie de support de buses (62, 64) et le guidage (46) sur le dispositif de maintien (28) ;
- un guidage forcé (50) respectif est prévu, qui guide le mouvement de la partie de support de buses (62, 64) lorsque la partie de support de buses (62, 64) est amenée à pivoter et déplacée par rapport au dispositif de maintien (28) ;
- le dispositif de séchage (10 ; 133 ; 137 ; 145) comprend un dispositif d'accouplement (74) pour l'accouplement des parties de support de buses (62, 64) l'une à l'autre, dans lequel un mouvement d'une partie de support de buses (62, 64) par rapport au dispositif de maintien (28) peut être transmis à l'autre partie de support de buses (62, 64) et celle-ci peut également être mue par rapport au dispositif de maintien (28).

8. Dispositif de séchage selon la revendication 7, **caractérisé en ce qu'**au moins un de ce qui suit s'applique :
- le guidage forcé (50) respectif comprend une coulisse de guidage (48) et un élément de guidage (72) s'insérant dans celle-ci, dans lequel la coulisse de guidage (48) est disposée en particulier sur le dispositif de maintien (28) et l'élément de guidage sur la partie de support de buses (62, 64) et/ou dans lequel la coulisse de guidage (48) est réalisée sensiblement en forme de W ou de V ;
- le guidage forcé (50) respectif comprend un organe d'articulation (100), qui est articulé sur le dispositif de maintien (28) et sur la partie de support de buses (62, 64), dans lequel un organe de réglage (54) du dispositif de déplacement (52), en particulier un ensemble piston-cylindre (94, 96), agit sur l'organe d'articulation (100) et sur le dispositif de maintien (28) et peut être fixé sur l'organe d'articulation (100) de préférence dans une d'une pluralité de différentes positions (108) prédéfinies.

9. Dispositif de séchage selon la revendication 7 ou 8, **caractérisé en ce qu'**au moins un de ce qui suit s'applique :
- le dispositif d'accouplement (74) comprend une articulation (76) reliant les parties de support de buses (62, 64) l'une à l'autre, par l'intermédiaire de laquelle les parties de support de buses (62, 64) sont reliées l'une à l'autre de manière pivotante, dans lequel l'articulation (76) est disposée de préférence sur des faces d'extrémité respectives tournées l'une vers l'autre des parties de support de buses (62, 64) ;
- le dispositif d'accouplement (74) comprend sur les parties de support de buses (62, 64) respectivement un corps de roulement (135) qui, lors du pivotement des parties de support de buses (62, 64) dans l'au moins une position angulaire, roulent l'un sur l'autre, dans lequel les corps de roulement (135) sont disposés de préférence sur des faces d'extrémité respectives tournées l'une vers l'autre des parties de support de buses (62, 64) ;
- le dispositif d'accouplement (74) comprend un organe d'articulation (138), qui est articulé sur les parties de support de buses (62, 64), de préférence sur des faces d'extrémité respectives tournées l'une vers l'autre des parties de support de buses (62, 64) ;
- le dispositif d'accouplement comprend un organe d'articulation (146), qui est articulé sur les organes d'articulation (100) du guidage forcé (50) respectif.

10. Dispositif de séchage selon l'une quelconque des revendications précédentes, **caractérisé en ce que** le dispositif de déplacement (52) comprend un entraînement de roulement (156 ; 162) respectif pour les parties de support de buses (62, 64) avec une bande d'entraînement (157 ; 163) mobile sur le dispositif de maintien (28) et un corps de roulement (159, 164) roulant sur celle-ci et fixé directement ou indirectement sur la partie de support de buses (62, 64), dans lequel de préférence au moins un de ce qui suit s'applique :
- le corps de roulement (159, 164) est relié de manière solidaire en rotation à un organe d'articulation (100) respectif du guidage forcé (50) ;
- le dispositif de déplacement (52) comprend une roue d'entraînement (158) commune, avec laquelle les deux bandes d'entraînement (157) associées aux parties de support de buses (62, 64) peuvent être entraînées.

11. Dispositif de séchage selon l'une quelconque des revendications précédentes, **caractérisé en ce qu'**au moins un de ce qui suit s'applique :
- les parties de support de buses (62, 64) sont reliées de manière articulée au dispositif de maintien (28) respectivement par l'intermédiaire de deux organes d'articulation (100, 153) de différente longueur, qui sont articulés à distance l'un de l'autre sur le dispositif de maintien (28) et sur la partie de support de buses (62, 64) respective ;
- les parties de support de buses (62, 64) sont reliées de manière respectivement pivotante au dispositif de maintien (28), dans lequel, pour chaque partie de support de buses (62, 64), deux bandes de guidage (167, 168) courbées disposées à distance l'une de l'autre et des éléments de guidage (169, 170) s'insérant dans celles-ci sont prévus ;
- le dispositif de déplacement (52) agit sur une seule des parties de support de buses (62, 64), afin de déplacer celle-ci par rapport au dispositif de maintien (28) ;
- le dispositif de maintien (28) comprend une partie de maintien (40, 42), associée à une partie de support de buses (62, 64) respective, sur laquelle la partie de support de buses (62, 64) respective est montée mobile, ainsi qu'un support (32) maintenant les parties de maintien (40, 42) ;
- le dispositif de séchage (10 ; 92 ; 110 ; 133 ; 137 ; 145 ; 155 ; 161 ; 166) comprend un dispositif de levage (34) pour le levage du dispositif de maintien (28), avec le dispositif de support de buses (60) y maintenu, par rapport au véhicule à moteur (16) et/ou un dispositif de basculement (36) destiné à faire basculer le dispositif de maintien (28), avec le dispositif de support de buses (60) maintenu dessus, par rapport au véhicule à moteur ;
- les buses (80) sont ou comprennent des buses à jet plat (80), qui forment sensiblement dans un plan un flux d'air s'élargissant en éventail ;
- les buses (80) sont ou comprennent des buses à jet rond, qui forment un flux d'air cylindrique, cylindrique creux, conique, tronconique ou en forme de cône creux ;
- les buses (80) sont ou comprennent des buses à fente, dans lequel une seule buse à fente peut être prévue sur chaque partie de support de buses ;
- les buses (80) sont ou comprennent des buses qui réalisent un flux d'air dans une surface courbée.

12. Dispositif de séchage selon la revendication 11, **caractérisé en ce que** le dispositif de séchage (10 ; 92 ; 110 ; 133 ; 137 ; 145 ; 155 ; 161 ; 166 ; 172 ; 178) comprend un dispositif de détection (22) destiné à détecter le contour du véhicule à moteur (16) et un dispositif de commande (24) couplé au dispositif de détection (22) et au dispositif de levage (34), dans lequel le dispositif de séchage (10 ; 92 ; 110 ; 133 ; 137 ; 145 ; 155 ; 161 ; 166) peut être amené à une distance telle de la surface du véhicule à moteur (16) que des flux d'air (86) des buses (80) se superposent au-dessus de la surface.

13. Dispositif de séchage selon l'une quelconque des revendications précédentes, **caractérisé en ce que** respectivement une pluralité de buses (80), qui sont disposées en particulier latéralement les unes à côté des autres sur la partie de support de buses (62, 64), est maintenue sur les parties de support de buses (62, 64).

14. Dispositif de séchage selon la revendication 13, **caractérisé en ce qu'**au moins un de ce qui suit s'applique :
- les buses (80) sont disposées sur les parties de support de buses (62, 64), de telle sorte que, dans leur au moins une position angulaire, les flux d'air (86) réalisent une forme convexe ou concave dans la direction de traitement (20) ;
- la pluralité des buses (80) sont des buses à jet plat (80) et/ou buses à jet rond ;
- les différentes buses (80) sont maintenues séparées les unes des autres sur la partie de support de buses (62, 64) et peuvent être alimentées en air de séchage par un dispositif de soufflage (78) du dispositif de séchage (10 ; 92 ; 110 ; 133 ; 137 ; 145 ; 155 ; 161 ; 166 ; 172 ; 178) par l'intermédiaire de canaux respectifs ;
- un canal (84) pour l'air de séchage est maintenu sur une partie de support de buses (62, 64) respective ou la partie de support de buses (62, 64) respective comprend un tel canal (84) ou est formée par un canal qui présente côté sortie la pluralité de buses (80) et qui peut être alimenté côté entrée en air de séchage par un dispositif de soufflage (78).

15. Dispositif de séchage selon l'une quelconque des revendications précédentes, **caractérisé en ce que** le dispositif de séchage (10 ; 92 ; 110 ; 133 ; 137 ; 145 ; 155 ; 161 ; 166 ; 172 ; 178) comprend un dispositif de soufflage (78) avec au moins une soufflante (82) alimentant les buses en air de séchage.

16. Dispositif de séchage selon la revendication 15, **caractérisé en ce qu'**au moins un de ce qui suit s'applique :
- le dispositif de soufflage (78) comprend une soufflante (82), qui est associée à deux buses (80) ou plus, ou une soufflante (82), séparée, du dispositif de soufflage (78) est associée à chaque buse (80) ;
- le dispositif de soufflage (78) est maintenu sur le dispositif de maintien (28) et est de préférence réglable en hauteur avec celui-ci et/ou peut basculer autour d'un axe (38) transversalement à la direction de traitement (20).

17. Dispositif de séchage selon l'une quelconque des revendications précédentes, **caractérisé en ce qu'**au moins un de ce qui suit s'applique :
- une buse à fente est disposée sur chaque partie de support de buses (62, 64), étendue dans la direction longitudinale de celle-ci ;
- les parties de support de buses (62, 64) et les buses (80) maintenues sur celles-ci sont réalisées de manière symétrique l'une par rapport à l'autre et disposées sur le dispositif de séchage (10 ; 92 ; 110 ; 133 ; 137 ; 145 ; 155 ; 161 ; 166 ; 172 ; 178) ;
- une buse à jet rond est disposée sur au moins une partie de support de buses (62, 64) de manière tournée vers la partie de support de buses (62, 64) voisine, de sorte que, dans la position angulaire des parties de support de buses, au moins un flux d'air peut être produit sur la zone de crête (90) au moyen de la buse à jet rond ;
- des buses (80) sont retenues de manière variable en position sur une partie de support de buses (62, 64) respective ;
- des parties de support de buses (62, 64) voisines sont reliées l'une à l'autre de manière pivotante et/ou mobile sur une articulation (76 ; 179).

18. Installation de lavage de véhicule, comprenant au moins un dispositif de séchage (10 ; 92 ; 110 ; 133 ; 137 ; 145 ; 155 ; 161 ; 166 ; 172 ; 178) selon l'une quelconque des revendications précédentes.
